(19) Europäisches Patentamt
European Patent Office
Office européen des brevets

(11) EP 1 380 599 B1

(12) EUROPEAN PATENT SPECIFICATION

(45) Date of publication and mention of the grant of the patent:
**21.09.2005 Bulletin 2005/38**

(51) Int Cl.[7]: **C08F 8/12**

(21) Application number: **03014582.5**

(22) Date of filing: **07.07.2003**

# (54) Polyvinyl alcohol and method for producing polyvinyl alcohol

Polyvinylalkohol und Verfahren zur Herstellung von Polyvinylalkohol

Alcool polyvinylique et procédé de fabrication d'alcool polyvinylique

(84) Designated Contracting States:
**DE FR GB**

(30) Priority: **11.07.2002 JP 2002203146**

(43) Date of publication of application:
**14.01.2004 Bulletin 2004/03**

(73) Proprietor: **KURARAY CO., LTD.**
**Okayama 710-8622 (JP)**

(72) Inventors:
- **Kusudou, Takeshi, Kuraray Co., Ltd.**
**Kurashiki-City, Okayama Prefecture (JP)**
- **Jikihara, Atsushi, Kuraray Co., Ltd.**
**Kurashiki-City, Okayama Prefecture (JP)**
- **Fujiwara, Naoki, Kuraray Co., Ltd.**
**Kurashiki-City, Okayama Prefecture (JP)**

(74) Representative: **Müller-Boré & Partner Patentanwälte**
**Grafinger Strasse 2**
**81671 München (DE)**

(56) References cited:

| | |
|---|---|
| **EP-A- 0 076 490** | **EP-A- 0 146 138** |
| **EP-A- 0 164 134** | **EP-A- 0 884 332** |
| **EP-A- 1 008 605** | **US-A- 4 277 388** |

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

EP 1 380 599 B1

## Description

The present invention relates to a polyvinyl alcohol (i.e. vinyl alcohol-based polymer). More precisely, the invention relates to a silyl group-having polyvinyl alcohol, which is characterized in that it may be readily dissolved in water to form an aqueous solution thereof even though an alkali such as sodium hydroxide or an acid is not added thereto; its aqueous solution has good viscosity stability; a film formed of its aqueous solution is excellent in resistance to water; its binding force with inorganic substances is high; and a film formed of its mixture with an inorganic substance is excellent in resistance to water.

The invention also relates to a method for producing the polyvinyl alcohol. The invention further relates to a coating agent that contains the polyvinyl alcohol, and to coated products such as an inkjet recording material and a thermal recording material fabricated by applying the coating agent to a substrate .

The vinyl alcohol-based polymer (i.e., the polyvinyl alcohol) represented by polyvinyl alcohol (hereinafter this may be abbreviated as PVA) is known as a water-soluble synthetic polymer, and is used as a starting material for synthetic fiber vinylon. In addition, it is widely used in other various fields of paper processing, fiber processing, adhesives, stabilizers in emulsion polymerization and suspension polymerization, binders for inorganic substances, films, etc. As compared with other synthetic polymers, PVA is especially excellent in point of its mechanical strength and its film-forming ability, and based on such its characteristics, PVA is favorably used in a clear coating agent that improves the surface characteristics of paper or for a binder in pigment coating.

Various trials have heretofore been made for PVA modification to expand the use of PVA. One is to introduce silicon (silyl group) into PVA. A silyl group-having PVA is especially excellent in point of its water-resistance and its reactivity and adhesiveness to inorganic substances. For example, a method is known for producing such a silyl group-having PVA, which comprises dissolving a silylating agent such as triethylchlorosilane in an organic solvent, then adding a powdery PVA thereto and reacting them with stirring (JP-A 55-164614). However, the method is problematic in that it could hardly give a uniformly modified product and it requires an additional step of reacting PVA with a silylating agent in addition to the essential step of PVA production. From the industrial viewpoint, therefore, the method is impracticable.

Other methods of silyl group-having PVA production that are free from these problems have been proposed. For example, one method comprises hydrolyzing a copolymer of a vinyl alkoxysilane such as vinyltriethoxysilane and vinyl acetate (JP-A 50-123189); another method comprises hydrolyzing a copolymer of a silyl group-having acrylamide derivative and a vinyl ester such as vinyl acetate (JP-A 58-59203) ; still another method comprises hydrolyzing a copolymer of a specifically-substituted silyl group-having monomer and a vinyl ester (JP-A 58-79003); and still another method comprises hydrolyzing a copolymer of a silyl group-haying allyl monomer and a vinyl ester(JP-A 58-164604).

However, the silyl group-having PVAs obtained in these methods are all problematic in that (a) in preparing an aqueous solution of the silyl group-having PVA, some of the silyl group-having PVAs could not dissolve in water if an alkali such as sodium hydroxide or an acid is not added thereto, (b) the viscosity stability of the aqueous solution of the silyl group-having PVA is not good; (c) the water-resistance of the films formed of the aqueous solution of the silyl group-having PVA is not good; and (d) when films that contain the silyl group-having PVA and an inorganic substance are formed, they could not satisfy at the same time both the binding force between the polymer and the inorganic substance therein and the water-resistance thereof.

An ionic hydrophilic group-introduced, silyl group-having PVA has been proposed (JP-A 59-182803); and it is reported that a PVA having a silanol group in its side branches has a strong interactivity with inorganic substances (Journal of the Chemical Society of Japan, 1994, (4), 365-370) . However, even these modified PVAs could not still solve the above-mentioned problems (a) to (d).

An object of the invention is to provide a silyl group-having polyvinyl alcohol, which is characterized in that it may be readily dissolved in water to form an aqueous solution thereof even though an alkali such as sodium hydroxide or an acid is not added thereto; its aqueous solution has good viscosity stability; a film formed of its aqueous solution is excellent in resistance to water; its binding force with inorganic substances is high; and a film formed of its mixture with an inorganic substance is excellent in resistance to water.

The invention also relates to a method for producing the polyvinyl alcohol. The invention further relates to a coating agent that contains the polyvinyl alcohol, and to coated products such as an inkjet recording material and a thermal recording material fabricated by applying the coating agent to a substrate .

We, the present inventors have assiduously studied to attain the object as above, and, as a result, have found that a silyl group-having polyvinyl alcohol that satisfies specific requirements is characterized in that it may be readily dissolved in water to form an aqueous solution thereof even though an alkali such as sodium hydroxide or an acid is not added thereto; its aqueous solution has good viscosity stability; a film formed of its aqueous solution is excellent in resistance to water; its binding force with inorganic substances is high; and a film formed of its mixture with an inorganic substance is excellent in resistance to water. On the basis of these findings, we have completed the present invention. Specifically, the invention is a polyvinyl alcohol,

which is obtained through hydrolysis of a polyvinyl ester that contains silyl group-having monomer units of formula (1) :

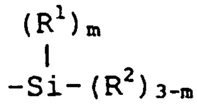

(1)

wherein $R^1$ represents an alkyl group having from 1 to 5 carbon atoms; $R^2$ represents an alkoxy or acyloxy group optionally having an oxygen-containing substituent; and m indicates an integer of from 0 to 2,
which satisfies the following formula (I) :

$$20 < Pw \times S < 460 \qquad (I)$$

wherein Pw indicates the weight-average degree of polymerization of the polyvinyl alcohol; S indicates the content (mol%) of the silyl group-having monomer units of formula (1) in the polyvinyl alcohol,
and in which the weight fraction of the polymer molecules having the degree of polymerization that are more than 3 times the weight-average degree of polymerization of the whole polyvinyl alcohol molecules is at most 25 % by weight.

As so mentioned hereinabove, the polyvinyl alcohol of the invention is obtained through hydrolysis of a polyvinyl ester that contains silyl group-having monomer units of the following formula (1):

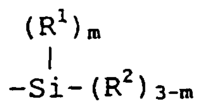

(1)

wherein $R^1$ represents an alkyl group having from 1 to 5 carbon atoms; $R^2$ represents an alkoxyl or acyloxyl group optionally having an oxygen-containing substituent; and m indicates an integer of from 0 to 2,
and this must satisfy the following formula (I) :

$$20 < Pw \times S < 460 \qquad (I)$$

wherein Pw indicates the weight-average degree of polymerization of the polyvinyl alcohol; S indicates the content (mol%) of the silyl group-having monomer units of formula (1) in the polyvinyl alcohol,
further the weight fraction of the polymer molecules having degree of polymerization that are more than 3 times the weight-average degree of polymerization of the whole polyvinyl alcohol molecules must be at most 25 % by weight.

The polyvinyl alcohol of the invention must satisfy the relationship of $20 < Pw \times S < 460$, in which ($Pw \times S$) is a product of the weight-average degree of polymerization (Pw) of the polyvinyl alcohol and the content (S) of the silyl group-having monomer units. Preferably, $Pw \times S$ satisfies the relationship of $50 < Pw \times S < 420$, more preferably $100 < Pw \times S < 390$. If $Pw \times S$ is 20 or less, then the water-resistance of the film formed of an aqueous solution of the silyl group-having PVA may be poor; but if $Pw \times S$ is 460 or more, then the silyl group-having PVA could not dissolve in water when no alkali is added thereto.

If the weight fraction of the polyvinyl alcohol molecules of which degree of polymerization are more than 3 times the weight-average degree of polymerization of the whole polyvinyl alcohol molecules is over 25 % by weight, then the viscosity stability of an aqueous solution of the polyvinyl alcohol may lower and, in addition, a uniform aqueous solution of the polyvinyl alcohol with an inorganic substance could not be prepared.

The reason why the viscosity stability of the aqueous solution of the polyvinyl alcohol may lower when the weight fraction of the polyvinyl alcohol molecules of which the degree of polymerization are more than 3 times the weight-average degree of polymerization of the whole polyvinyl alcohol molecules is over 25 % by weight will be as follows:

Of all the monomer units that constitute the silyl group-having polymer, the silyl group-having monomer units are uniformlyin the polymer. Therefore, the polymer having a larger degree of polymerization may have a larger number of the silyl group-having monomer units in one molecule thereof. In case where the number of the silyl group-having monomer units in one molecule of the polymer is larger, the polymer may be more influenced by the silyl groups therein.

Specifically, the polymer having a larger degree of polymerization is more influenced by the silyl groups therein than that having a smaller degree of polymerization. Accordingly, the polyvinyl alcohol that contains a larger amount of polymer having high degree of polymerization contains a larger amount of the polymer that is more influenced by the silyl groups therein, and, as a result, the viscosity stability of the aqueous solution of the polyvinyl alcohol of the type will lower.

As opposed to it, the polymer having a smaller degree of polymerization may have a smaller number of the silyl group-having monomer units in one molecule thereof. In case where the number of the silyl group-having monomer units in one molecule of the polymer is smaller, the polymer may be less influenced by the silyl groups therein. Specifically, the polymer having a smaller degree of polymerization could more hardly enjoy the effect of the silyl groups therein than that having a larger degree of polymerization. Accordingly, the polyvinyl alcohol that contains a larger amount of polymer having low degree of polymerization contains a larger amount of the polymer of which the effect of the silyl groups therein is lower.

Preferably, in the polyvinyl alcohol of the invention, the weight fraction of the polymer molecules of which the degree of polymerization are smaller than 1/2 times the weight-average degree of polymerization Pw of the whole polyvinyl alcohol molecules is at most 12 % by weight. In the polyvinyl alcohol of the invention, when the weight fraction of the polymer molecules of which the degree of polymerization are smaller than 1/2 times the weight-average degree of polymerization of the whole polyvinyl alcohol molecules is larger than 12 % by weight, then the polyvinyl alcohol contains a large amount of the polymer having low degree of polymerization, which does not have a good effect of the silyl groups therein. Therefore, when a film of the polyvinyl alcohol of the type and an inorganic substance is formed, its water-resistance and the binding force of the polymer with the inorganic substance therein will be low.

The weight-average degree of polymerization (Pw) and the distribution of polymerization degree of the polyvinyl alcohol may be obtained through GPC-LALLS analysis. Concretely, the silyl group-having PVA is re-hydrolyzed to a degree of hydrolysis of at least 99.5 %, then purified, and thereafter subjected to GPC-LALLS analysis to obtain the weight-average molecular weight of the polymer, and this is divided by the formular weight of the vinyl alcohol monomer unit, 44 to obtain the weight-average degree of polymerization of the polymer. In addition, from the integral distribution of polymerization degree to be obtained through the GPC-LALLS analysis, the weight fraction of the polymer molecules of which degree of polymerization are within the specified range may be obtained.

In the polyvinyl alcohol of the invention, the content S (mol%) of the silyl group-having monomer units may be obtained through proton NMR of the corresponding polyvinyl ester before hydrolysis. Prior to its proton NMR, the polyvinyl ester before hydrolysis is purified through reprecipitation with hexane-acetone to completely remove the unreacted silyl group-having monomer from the polymer, and then this is dried at 90°C under reduced pressure for 2 days, and thereafter dissolved in a solvent $CDCl_3$ and subjected to the analysis.

Preferably, the polyvinyl alcohol of the invention satisfies the following formula (II), and the pH of its aqueous 4 % solution falls between 4 and 8.

$$0.1/100 \leq (A - B)/(B) \leq 50/100 \qquad \text{(II)}$$

wherein A indicates the silicon atom content (unit: ppm) of the polyvinyl alcohol,

B indicates the silicon atom content (unit: ppm) of the polyvinyl alcohol that has been washed with sodium hydroxide-containing methanol and then washed through Soxhlet extraction with methanol.

In the above, A and B are measured by ashing a sample of the polyvinyl alcohol and subjecting it to ICP emission spectrometry.

Preferably, the range of (A - B) / (B) falls between 0.1/100 and 50/100, more preferably between 0.3/100 and 25/100, even more preferably between 0.4/100 and 20/100. If the ratio (A - B) / (B) is over 50/100, it is unfavorable since the viscosity stability of the aqueous solution of the silyl group-having PVA may lower and it may be impossible to prepare a uniform aqueous solution of the silyl group-having PVA with an inorganic substance. If (A - B) / (B) is smaller than 0.1/100, then it is impracticable since the water-resistance of the film formed of the silyl group-having PVA with an inorganic substance and the binding force of the silyl group-having PVA with the inorganic substance in the film may be low and, in addition, the washing cost of the polyvinyl alcohol of which the ratio (A - B)/(B) is smaller than 0.1/100 is high in producing the polymer.

In obtaining the silicon atom content (B) of the polyvinyl alcohol, one standard method of washing the polymer comprises repeating five times an operation of washing the polymer with sodium hydroxide-containing methanol (the washing operation comprises adding 10 parts by weight of a sodium hydroxide-containing methanol solution to one part by weight of the polyvinyl alcohol to such a degree that the molar ratio of sodium hydroxide to the vinyl alcohol monomer units of the polyvinyl alcohol may be 0.01, then boiling the resulting mixture for one hour and separating the polymer through filtration), and then subjecting the thus-washed polymer to Soxhlet extraction with methanol for one week. In the washing process, the washing operation with sodium hydroxide-containing methanol and the Soxhlet

extraction with methanol are attained until the silicon atom content of the thus-processed polyvinyl alcohol does not almost vary any more. Within the range that satisfies the condition, the frequency of the washing operation with sodium hydroxide-containing methanol and the duration of the Soxhlet extraction with methanol may be suitably changed.

It may be considered that the silicon atom content (A) of the polyvinyl alcohol may be the overall silicon atom content of the polyvinyl alcohol. On the other hand, it may be considered that the silicon atom content (B) of the polyvinyl alcohol that has been washed with sodium hydroxide-containing methanol and then washed through Soxhlet extraction with methanol may be the silicon atom content thereof that is derived from the silyl group-having monomer directly incorporated into the backbone chain of the polyvinyl alcohol.

Before analyzed for obtaining the silicon atom content (B) thereof, the polyvinyl alcohol is washed with sodium hydroxide-containing methanol, and the siloxane bond (-Si-O-Si-) therein is cut during the washing treatment. In this step, the silyl group-having monomer that is not directly incorporated into the backbone chain of the polyvinyl alcohol but is bonded to the backbone chain thereof via a siloxane bond is cut away from the polyvinyl alcohol and removed from the polymer. Therefore, it may be considered that the silicon atom content (B) of the polyvinyl alcohol may be the silicon atom content thereof from which the silyl group-having monomer not directly incorporated into the backbone chain of the polymer has been removed. Accordingly, it may be considered that (A - B) in the above-mentioned relational formula $0.1/100 \leq (A - B) / (B) \leq 50/100$ may indicate the silyl group content derived from the silyl group-having monomer units not directly incorporated into the backbone chain of the polyvinyl alcohol.

When the value (A - B)/(B) of the polyvinyl alcohol is large, it means that the polyvinyl alcohol contains a large amount of excess silyl group-having monomer units; and when the value (A - B)/(B) of the polyvinyl alcohol is small, it means that the amount of the excess silyl group-having monomer units not directly introduced into the backbone chain of the polyvinyl alcohol is small.

If the value (A - B) / (B) is too large, then a large number of siloxane bonds (-Si-O-Si-) may be formed between the excess silyl group-having monomer units and the silyl group-having monomer units incorporated into the backbone chain of the polymer. If so, therefore, it may be considered that the molecular mobility of the polyvinyl alcohol may be restricted and the viscosity stability of the aqueous solution of the polyvinyl alcohol may be thereby lowered, and, in addition, the interaction between the polyvinyl alcohol and inorganic substances may increase too much and a uniform aqueous solution of a mixture of the polyvinyl alcohol and an inorganic substance could not be prepared.

If the value (A - B) / (B) is too small, then the proportion of the siloxane bonds (-Si-O-Si-) to be formed between the excess silyl group-having monomer units and the silyl group-having monomer units incorporated into the backbone chain of the polymer may be low and, as a result, the amount of the silyl groups to be in the polyvinyl alcohol will lower and the interaction between the polyvinyl alcohol and inorganic substances will also lower, and, in addition, when a film that contains the polyvinyl alcohol and an inorganic substance is formed, its water-resistance and the binding force of the polymer with the inorganic substance therein will be low.

The polyvinyl alcohol of the invention is preferably such that the pH of its aqueous 4 % solution falls between 4 and 8. More preferably, the pH of its aqueous 4 % solution falls between 4.5 and 7, even more preferably between 5 and 6.5. If the pH of the aqueous 4 % solution of the polymer is lower than 4, it is unfavorable since the viscosity stability of the aqueous polyvinyl alcohol solution may lower; and if the pH of the aqueous 4 % solution of the polymer is higher than 8, it is also unfavorable since the water-resistance of the film formed of the polyvinyl alcohol with an inorganic substance may lower.

In formula (1) that represents the silyl group to be in the polyvinyl alcohol of the invention, $R^1$ is an alkyl group having from 1 to 5 carbon atoms, and $R^2$ is an alkoxyl group or an acyloxyl group, which may have an oxygen-containing substituent, and m indicates an integer of from 0 to 2.

The alkyl group having from 1 to 5 carbon atoms for $R^1$ includes, for example, methyl, ethyl, n-propyl, isopropyl, n-butyl, sec-butyl, tert-butyl, isobutyl, n-pentyl, tert-pentyl and isopentyl groups. The alkoxyl group for $R^2$ includes, for example, methoxy, ethoxy, propoxy, isopropoxy, butoxy, tert-butoxy, pentoxy, hexyloxy, octyloxy, lauryloxy and oleyloxy groups. The acyloxyl group for it includes, for example, acetoxy and propionyloxy groups. The alkoxyl or acyloxy group may have an oxygen-containing substituent. One example of the substituent is an alkoxyl group such as methoxy or ethoxy group.

The polyvinyl alcohol of the invention may be produced by copolymerizing a vinyl ester monomer with a monomer having the silyl group of formula (1), followed by hydrolyzing the resulting polyvinyl ester.

Alternatively, the polyvinyl alcohol of the invention may also be produced by copolymerizing a vinyl ester monomer with a monomer having a silyl group of formula (1) in the presence of a thiol compound such as 2-mercaptoethanol, n-dodecylmercaptan, mercaptoaceticacidor 3-mercaptopropionic acid, followed by hydrolyzing the resulting polyvinyl ester. This method gives a polyvinyl alcohol terminated with a thiol compound-derived functional group introduced thereinto.

The vinyl ester monomer to be used in producing the polyvinyl alcohol includes, for example, vinyl formate, vinyl acetate, vinyl propionate, vinyl valerate, vinyl caprylate, vinyl laurate, vinyl stearate, vinyl benzoate, vinyl pivalate and vinyl versatate. Of these, especially preferred is vinyl acetate.

The monomer that has the silyl group of formula (1) and is radical-copolymerized with such a vinyl ester monomer includes, for example, compounds of formula (2) :

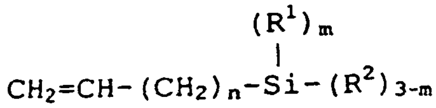

(2)

wherein $R^1$ represents an alkyl group having from 1 to 5 carbon atoms; $R^2$ represents an alkoxyl or acyloxyl group optionally having an oxygen-containing substituent; m indicates an integer of from 0 to 2; and n indicates an integer of from 0 to 4,
and compounds of formula (3) :

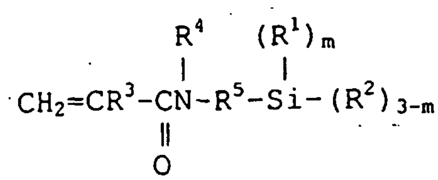

(3)

wherein $R^1$ represents an alkyl group having from 1 to 5 carbon atoms; $R^2$ represents an alkoxyl or acyloxyl group optionally having an oxygen-containing substituent; $R^3$ represents a hydrogen atom or a methyl group; $R^4$ represents a hydrogen atom, or an alkyl group having from 1 to 5 carbon atoms; $R^5$ represents an alkylene group having from 1 to 5 carbon atoms, or a divalent hydrocarbon group that contains an oxygen or nitrogen atom; and m indicates an integer of from 0 to 2.

In formulae (2) and (3), the alkyl group having from 1 to 5 carbon atoms for $R^1$ includes, for example, methyl, ethyl, n-propyl, isopropyl, n-butyl, sec-butyl, tert-butyl, isobutyl, n-pentyl, tert-pentyl and isopentyl groups. The alkoxyl group for $R^2$ includes, for example, methoxy, ethoxy, propoxy, isopropoxy, butoxy, tert-butoxy, pentoxy, hexyloxy, octyloxy, lauryloxy and oleyloxy groups. The acyloxyl group for it includes, for example, acetoxy and propionyloxy groups. The alkoxyl or acyloxy group may have an oxygen-containing substituent. One example of the substituent is an alkoxyl group such as methoxy or ethoxy group. The alkyl group having from 1 to 5 carbon atoms for $R^4$ includes, for example, methyl, ethyl, n-propyl, isopropyl, n-butyl, sec-butyl, tert-butyl, isobutyl, n-pentyl, tert-pentyl and isopentyl groups. The alkylene group having from 1 to 5 carbon atoms for $R^5$ includes, for example, methylene, ethylene, dimethylethylene, trimethylene, tetramethylene and pentamethylene groups. The divalent hydrocarbon group that contains an oxygen or nitrogen atom for it includes, for example, $-CH_2CH_2NHCH_2CH_2CH_2-$, $-CH_2CH_2NHCH_2CH_2-$, $-CH_2CH_2NHCH_2-$, $-CH_2CH_2N(CH_3)CH_2CH_2-$, $-CH_2CH_2N(CH_3)CH_2-$, $-CH_2CH_2OCH_2CH_2CH_2-$, $-CH_2CH_2OCH_2CH_2-$, and $-CH_2CH_2OCH_2-$.

The monomer of formula (2) includes, for example, vinyltrimethoxysilane, vinylmethyldimethoxysilane, vinyldimethylmethoxysilane, vinyltriethoxysilane, vinylmethyldiethoxysilane, vinyldimethylethoxysilane, allyltrimethoxysilane, allylmethyldimethoxysilane, allyldimethylmethoxysilane, allyltriethoxysilane, allylmethyldiethoxysilane, allyldimethylethoxysilane, vinyltris(β-methoxyethoxy)silane, vinylisobutyldimethoxysilane, vinylethyldimethoxysilane, vinylmethoxydibutoxysilane, vinyldimethoxybutoxysilane, vinyltributoxysilane, vinylmethoxydihexyloxysilane, vinyldimethoxyhexyloxysilane, vinyltrihexyloxysilane, vinylmethoxydioctyloxysilane, vinyldimethoxyoctyloxysilane, vinyltrioctyloxysilane, vinylmethoxydilauryloxysilane, vinyldimethoxylauryloxysilane, vinylmethoxydioleyloxysilane, and vinyldimethoxyoleyloxysilane.

When a silyl group-having monomer of formula (2) where n is 1 or more is copolymerized with a vinyl ester monomer, the degree of polymerization of the polyvinyl ester obtained may lower. On the other hand, when vinyltrimethoxysilane is copolymerized with a vinyl ester monomer, the degree of polymerization of the polyvinyl ester obtained does not lower. Therefore, vinyltrimethoxysilane is favorable since its industrial production is easy and it is inexpensive.

The monomer of formula (3) includes, for example, 3-(meth)acrylamido-propyltrimethoxysilane, 3-(meth)acrylamido-propyltriethoxysilane, 3-(meth)acrylamido-propyltri(β-methoxyethoxy)silane, 2-(meth)acrylamido-ethyltrimethoxysilane, 1-(meth)acrylamido-methyltrimethoxysilane, 2-(meth)acrylamido-2-methylpropyltrimethoxysilane, 2-(meth)acrylamido-isopropyltrimethoxysilane, N-(2-(meth)acrylamido-ethyl)-aminopropyltrimethoxysilane, (3-(meth)acrylamido-propyl)-oxypropyltrimethoxysilane, 3-(meth)acrylamido-propyltriacetoxysilane, 2-(meth)acrylamido-ethyltriacetoxysilane, 4-(meth)acrylamido-butyltriacetoxysilane, 3-(meth)acrylamido-propyltripropionyloxysilane, 2-(meth)acrylamido-2-methylpropyltriacetoxysilane, N-(2-(meth)acrylamido-ethyl)-aminopropyltriacetoxysilane, 3-(meth)acrylamido-propylisobutyldimethoxysilane, 2-(meth)acrylamido-ethyldimethylmethoxysilane, 3-(meth)acrylamido-propylmethyldiacetoxysilane, 2-(meth)acrylamido-2-methylpropylhydrogendimethoxysilane, 3-(N-methyl-(meth)acrylamido)-propyltrimethoxysilane, and 2-(N-ethyl-(meth)acrylamido)-ethyltriacetoxysilane.

Of those monomers, preferred are 3-(meth)acrylamido-propyltrimethoxysilane and 3-(meth)acrylamido-propyltriacetoxysilane as their industrial production is relatively easy and they are inexpensive. In addition, 2-(meth)acrylamido-2-methylpropyltrimethoxysilane and 2-(meth)acrylamido-2-methylpropyltriacetoxysilane are also preferred since their amido bond is extremely stable to acid and alkali.

For copolymerizing such a silyl group-having monomer with a vinyl ester monomer, employable is any known method of, for example, bulk polymerization, solution polymerization, suspension polymerization or emulsion polymerization. Of those methods, generally employed is a method of bulk polymerization in the presence of no solvent or a method of solution polymerization in a solvent such as alcohol. Though not unconditionally defined as varying depending on the polymerization condition and others, a continuous polymerization system is the most preferred for such a bulk polymerization or solution polymerization method for producing the polyvinyl alcohol of the invention of which the weight fraction of the polymer molecules having degree of polymerization that are more than 3 times the weight-average degree of polymerization Pw of the whole polyvinyl alcohol molecules is at most 25 % by weight and of which the weight fraction of the polymer molecules having degree of polymerization that are less than 1/2 times the weight-average degree of polymerization Pw of the whole polyvinyl alcohol molecules is preferably at most 12 % by weight, from the viewpoint of lowering the proportion of the component having high degree of polymerization (hereinafter this may be abbreviated as the high-polymerization-degree component) and the component having low degree of polymerization (hereinafter this may be abbreviated as the low-polymerization-degree component) of the polyvinyl alcohol produced in the method. For the continuous polymerization system, for example, preferred is a one-tank or two-tank continuous polymerization system, and more preferred is a one-tank continuous polymerization system. On the other hand, when a batch polymerization system is employed for producing the polyvinyl alcohol of the invention, the proportion of the high-polymerization-degree component and the low-polymerization-degree component of the polyvinyl alcohol produced may vary depending on the conversion of the vinyl ester monomer used. Concretely, with the increase in the conversion of the monomer, the proportion of the high-polymerization-degree component and the low-polymerization-degree component of the polymer produced may increase. Therefore, in the batch polymerization system, it is desirable that the monomer is polymerized to a relatively low conversion. Though not unconditionally defined as varying depending on the polymerization condition and others, the preferred conversion of the vinyl ester monomer in the batch system may fall between 10 and 80 %, more preferably between 15 and 50 %. Alcohol may be used for the solvent in copolymerization according to a solution polymerization method, and it may be a lower alcohol such as methyl alcohol, ethyl alcohol, propyl alcohol . Any known initiator may be used for the copolymerization, including, for example, an azo-type initiator such as 2,2'-azobisisobutyronitrile, 2,2'-azobis(2,4-dimethylvaleronitrile), 1,1'-azobis(cyclohexane-1-carbonitrile), 2,2'-azobis(N-butyl-2-methylpropionamide) ; and a peroxide initiator such as benzoyl peroxide, n-propyl peroxycarbonate. The temperature for the copolymerization is not specifically defined, but preferably falls between 50°C and 180°C.

When a silyl group-having monomer is radical-copolymerized with a vinyl ester monomer to produce the polyvinyl alcohol of the invention, they may be optionally copolymerized with any other copolymerizable monomer, if desired, not interfering with the effect of the invention. The comonomer includes, for example, α-olefins such as ethylene, propylene, 1-butene, isobutene, 1-hexene; carboxylic acids and their derivatives such as fumaric acid, maleic acid, itaconic acid, maleicanhydride, itaconicanhydride; acrylic acid and its salts, acrylates such as methyl acrylate, ethyl acrylate, n-propyl acrylate, isopropyl acrylate; methacrylic acid and its salts, methacrylates such as methyl methacrylate, ethyl methacrylate, n-propyl methacrylate, isopropyl methacrylate; acrylamide and acrylamide derivatives such as N-methylacrylamide, N-ethylacrylamide; methacrylamide and methacrylamide derivatives such as N-methylmethacrylamide, N-ethylmethacrylamide; vinyl ethers such as methyl vinyl ether, ethyl vinyl ether, n-propyl vinyl ether, isopropyl vinyl ether, n-butyl vinyl ether; hydroxy group-having vinyl ethers such as ethylene glycol vinyl ether, 1,3-propanediol vinyl ether, 1,4-butanediol vinyl ether; allyl acetate; allyl ethers such as propyl allyl ether, butyl allyl ether, hexyl allyl ether; oxyalkylene group-having monomers; isopropenyl acetate; hydroxy group-having α-olefins such as 3-buten-1-ol, 4-penten-1-ol, 5-hexen-1-ol, 7-octen-1-ol, 9-decen-1-ol, 3-methyl-3-buten-1-ol; sulfonic acid-group-having monomers such as ethylenesulfonic acid, allylsulfonic acid, methallylsulfonic acid, 2-acrylamido-2-methylpropanesulfonic acid; and cationic group-having monomers such as vinyloxyethyltrimethylammonium chloride, vinyloxybutyltrimethylammonium chloride, vinyloxyethyldimethylamine, vinyloxymethyldiethylamine, N-acrylamidomethyltrimethylammonium chloride, N-acrylamidoethyltrimethylammonium chloride, N-acrylamidodimethylamine, allyltrimethylammonium chloride, methallyltrimethylammonium chloride, dimethylallylamine, allylethylamine. The amount of the monomer need that is copolymerizable with a silyl group-having monomer and a vinyl ester monomer may be generally at most 20 mol%, preferably at most 10 mol% of the total amount of all the monomers to be copolymerized, though varying depending on the object and the use thereof.

The polyvinyl ester obtained through copolymerization of a silyl group-having monomer and a vinyl ester monomer is then hydrolyzed in a solvent in a known method to be a polyvinyl alcohol.

In general, an alkaline substance is used for the catalyst for hydrolysis of the polyvinyl ester. Its examples are alkali metal hydroxides such as potassium hydroxide, sodium hydroxide; and alkali metal alkoxides such as sodium methoxide. The amount of the alkaline substance to be used preferably falls between 0.004 and 0.5, more preferably between 0.005 and 0.05 in terms of the molar ratio thereof to the vinyl ester monomer units in the polyvinyl ester to be produced. The catalyst for hydrolysis may be added to the reaction system all at a time in the initial stage of hydrolysis, or may be intermittently added thereto in such a manner that a part thereof is added in the initial stage of hydrolysis and the remaining part thereof is during hydrolysis.

The solvent usable in hydrolysis includes, for example, methanol, methyl acetate, dimethylsulfoxide, diethylsulfoxide, dimethylformamide. Of those solvents, preferred is methanol. In its use, the water content of methanol is preferably controlled to fall between 0.001 and 1 % by weight, more preferably between 0.003 and 0.9 % by weight, even more preferably between 0.005 and 0.8 % by weight.

The hydrolysis may be effected preferably at a temperature of 5 to 80°C, more preferably at 20 to 70°C. The time for hydrolysis is preferably 5 minutes to 10 hours, more preferably 10 minutes to 5 hours. The hydrolysis may be effected either batchwise or continuously. After the hydrolysis, if desired, the remaining catalyst may be neutralized. The neutralizing agent usable for it includes, for example, organic acids such as acetic acid, lactic acid; and ester compounds such as methyl acetate.

The degree of hydrolysis of the polyvinyl alcohol of the invention is not specifically defined but is preferably at least 80 mol%, more preferably at least 85 mol%, even more preferably at least 90 mol%. When a film of the polyvinyl alcohol with an inorganic substance is formed, its water-resistance is preferably higher. For it, the optimum degree of hydrolysis of the polyvinyl alcohol is at least 95 mol%.

The polyvinyl alcohol thus obtained through hydrolysis may be washed, if desired. This operation is useful as a means for controlling the value (A - B) / (B) of the polyvinyl alcohol mentioned hereinabove.

The washing liquid usable for the purpose includes, for example, lower alcohols such as methanol, lower fatty acid esters such as methyl acetate, and their mixtures. The washing liquid may contain a small amount of water, alkali or acid added thereto.

The method to be employed for washing the polyvinyl alcohol is difficult to unconditionally define, since it varies depending on the conversion in copolymerizing a vinyl ester monomer and a silyl group-having monomer, the degree of polymerization of the polyvinyl ester obtained through the copolymerization, and the degree of hydrolysis of the polyvinyl alcohol obtained through hydrolysis of the polyvinyl ester. For example, in one method for it, a lower alcohol such as methanol, a lower fatty acid ester such as methyl acetate or their mixture is used for the washing liquid and its amount is from 1 to 20 times the weight of the wet polyvinyl alcohol that is obtained through hydrolysis of the copolymer of a vinyl ester monomer with a silyl group-having monomer (polyvinyl ester) in an alcohol solution and is not as yet dried, therefore containing alcohol and others, and the polyvinyl alcohol in that condition is washed with the washing liquid at a temperature falling between 20°C and the boiling point of the washing liquid for 30 minutes to 10 hour or so.

The polyvinyl alcohol of the invention may be stored and transported while it is powdery. In its use, it may be still powdery or may be dispersed in liquid. The polyvinyl alcohol may be dissolved in water to be an aqueous solution thereof. In this case, the polyvinyl alcohol is once dispersed in water and then heated with stirring to give a uniform aqueous solution thereof. In this case, the polyvinyl alcohol may form a uniform aqueous solution thereof even though an alkali such as sodium hydroxide is not specifically added to water.

The polyvinyl alcohol of the invention is characterized in that it may be readily dissolved in water to form an aqueous solution thereof even though an alkali such as sodium hydroxide or an acid is not added thereto; its aqueous solution has good viscosity stability; a film formed of its aqueous solution is excellent in resistance to water; its binding force with inorganic substances is high; and a film formed of its mixture with an inorganic substance is excellent in resistance to water. Having the advantages, the polymer may be used for coating agents . The coated objects fabricated by applying the coating agent that contains the polyvinyl alcohol of the invention onto a substrate is favorably used for inkjet recording materials and thermal recording materials.

In case where a coating agent that contains the polyvinyl alcohol of the invention is applied onto a substrate to fabricate an inkjet recording material, the polyvinyl alcohol of the invention favorably acts as the binder in the ink-receiving layer of the material. In this case, the polyvinyl alcohol of the invention may be used alone or may be combined with any other water-soluble or water-dispersible resin. The water-soluble resin that may be combined with the polyvinyl alcohol of the invention includes, for example, albumin, gelatin, casein, starch, cationated starch, gum arabic, polyamide resins, melamine resins, poly(meth)acrylamide, polyvinylpyrrolidone, sodium poly (meth) acrylate, anion-modified PVA, sodium alginate, water-soluble polyesters, cellulose derivatives such as methyl cellulose, hydroxyethyl cellulose and carboxymethyl cellulose (CMC) ; and the water-dispersible resins that may be combined with the polyvinyl alcohol of the invention includes, for example, SBR latex, NBRlatex, polyvinyl acetate emulsion, ethylene/vinyl acetate copolymer

emulsion, poly(meth)acrylate emulsion, polyvinyl chloride emulsion; but these are not limitative.

In case where the polyvinyl alcohol of the invention is used for the binder in the ink-receiving layer of an inkjet recording material, the filler that may be in the ink-receiving layer includes, for example, precipitated silica, silica gel, fumed silica, colloidal silica, colloidal alumina, aluminum hydroxide, pseudoboehmite, clay, talc, diatomaceous earth, zeolite, calcium carbonate, alumina, zinc oxide, satin white, organic pigment, but these are not limitative. The ratio of the polyvinyl alcohol to the filler is not limitative, and in usual case, the ratio of the polyvinyl alcohol/the filler preferably falls between 5/100 and 100/100 by weight, more preferably between 10/100 and 80/100 by weight, even more preferably between 15/100 and 60/100.

When the polyvinyl alcohol of the invention is used for the binder in the ink-receiving layer of an inkjet recording material, it may be combined with a cationic resin serving as an ink fixer. The cationic resin is a monomer, oligomer or polymer, preferably an oligomer or polymer having a primary to tertiary amine or a quaternary ammonium salt that may be dissociated to be cationic when dissolved in water. Concretely, for example, it includes dimethylamine-epichlorohydrin polycondensate, acrylamide-diallylamine copolymer, polyvinylamine copolymer, dimethyldiallylammonium chloride polymer, polyethylenimine, but these are not limitative.

For the substrate for the inkjet recording material, usable is any known transparent or non-transparent support substrate. The transparent support substrate may be a film or sheet of, for example, polyester, polystyrene, polyvinyl chloride, polymethyl methacrylate, cellulose acetate, polycarbonate, polyimide, cellophane or celluloid, or paper of high transparency. The non-transparent support substrate may be ordinary paper, pigment-coated paper, cloth, wood, metal plate, synthetic paper, as well as synthetic resin film or sheet that has been processed for non-transparency.

For applying a coating agent that contains the polyvinyl alcohol of the invention onto a substrate to fabricate an inkjet recording material, for example, employable is a method that comprises dissolving or dispersing the polyvinyl alcohol and optionally a filler, an ink fixer and others in an aqueous medium to prepare a coating agent, and applying the thus-prepared coating agent onto a substrate by the use of any known size press, air knife coater, roll coater, bar coater, blade coater, curtain coater, cast coater or the like. For the aqueous medium, preferred is water. For the aqueous solvent, also usable is an aqueous solution prepared by dissolving any of water-soluble organic solvents, acids, bases or salts in water. The coating agent that contains the polyvinyl alcohol of the invention is applied onto a substrate to fabricate an inkjet recording material. Concretely, the coating agent that contains the polyvinyl alcohol is applied onto a substrate to impregnate the coating agent therein, or to form a PVA-coating layer on one or both surfaces thereof. Thus fabricated, the water-resistance of the inkjet recording material and the binding force of PVA with an inorganic substance therein are good.

In case where a coating agent that contains the polyvinyl alcohol of the invention is applied onto a substrate to fabricate a thermal recording material, the polyvinyl alcohol of the invention may be in any of the overcoat layer, the thermo-sensitive coloring layer or the undercoat layer of the material. In particular, the polyvinyl alcohol of the invention is preferred for the binder in the overcoat layer and the thermo-sensitive coloring layer of the material.

The thermal recording material in which the polyvinyl alcohol of the invention is in the overcoat layer has good water-resistance and good plasticizer resistance. When the polyvinyl alcohol of the invention is in the overcoat layer of a thermal recording material, it is generally combined with a crosslinking agent. The crosslinking agent is preferably any of aldehyde compounds such as glyoxal, glutaraldehyde; zirconium compounds such as ammonium zirconium carbonate; titanium compounds such as titanium lactate; colloidal silica; epoxy compounds such as polyamidamine-epichlorohydrin; and polyoxazoline. Not interfering with the water-resistance and the plasticizer resistance thereof, the polyvinyl alcohol of the invention may be combined with any known polymer or a dispersion thereof such as those mentioned below. Specific examples of the polymer and its dispersion are starch and its derivatives; cellulose derivatives such as hydroxymethyl cellulose, hydroxyethyl cellulose, carboxymethyl cellulose, methyl cellulose, ethyl cellulose; other water-soluble polymers such as polyvinyl alcohol, sodium polyacrylate, polyvinylpyrrolidone, acrylamide/acrylate copolymer, acrylamide/acrylate/methacrylic acid terpolymer, alkali salt of styrene/maleic anhydride copolymer, alkali salt of isobutylene/maleic anhydride copolymer, polyacrylamide, sodium alginate, gelatin, casein; emulsions of polyvinyl acetate, polyurethane, polyacrylic acid, polyacrylate, vinyl chloride/vinyl acetate copolymer, polybutyl methacrylate, ethylene/vinyl acetate copolymer; and latexes of styrene/butadiene copolymer, styrene/butadiene/acrylic copolymer.

When the polyvinyl alcohol of the invention is in the overcoat layer of a thermal recording material, the filler that may be combined with the polyvinyl alcohol may be any of kaolin, clay, talc, calcium carbonate, calcined clay, titanium oxide, diatomaceous earth, precipitated silica, silica gel, colloidal silica, aluminum oxide, aluminum hydroxide, synthetic aluminum silicate, synthetic magnesium silicate, polystyrene particles, polyvinyl acetate particles, urea-formalin resin particles. In the overcoat layer, the amount of the filler is preferably at least 20 % by weight of the total amount of all the components of the overcoat layer. If the amount is smaller than 20 % by weight, the water-resistance, the oil resistance and the plasticizer resistance of the layer may be poor.

The amount of the overcoat layer to be formed in fabricating a thermal recording material may be suitably selected within a range which the thermal conduction from the thermal head of a thermal recording apparatus to the

thermo-sensitive coloring layer of the thermal recording material is not retarded, and is generally from 1 to 10 $g/m^2$, preferably from 2 to 7 $g/m^2$.

The thermal recording material that contains the polyvinyl alcohol of the invention in its thermo-sensitive coloring layer may have good water-resistance and good plasticizer resistance. Not specifically defined, the thermo-sensitive dye to be in the thermo-sensitive coloring layer may be any and every one that is generally in ordinary pressure-sensitive recording materials or thermal recording materials. Specific examples of the thermo-sensitive dye are triarylmethane compounds such as 3,3-bis(p-dimethylaminophenyl)-6-dimethylaminophthalide (crystal violet lactone), 3-(p-dimethylaminophenyl)-3-(1,2-dimethylindol-3-yl) phthalide, 3-(p-dimethylaminophenyl)-3-(2-phenylindol-3-yl) phthalide, 3,3-bis(9-ethylcarbazol-3-yl)-5-dimethylaminophthalide; diphenylmethane compounds such as 4,4'-bisdimethylaminobenzhydrin benzyl ether, N-halophenyl-leucoauramine; xanthene compounds such as rhodamine B-anilinolactam, 3-diethylamino-7-benzylaminofluoran, 3-diethylamino-7-butylaminofluoran, 3-diethylamino-7-(chloroanilino)fluoran, 3-diethylamino-6-methyl-7-anilinofluoran, 3-piperidino-6-methyl-7-anilinofluoran, 3-ethyltolylamino-6-methyl-7-anilinofluoran, 3-cyclohexylmethylamino-6-methyl-7-anilinofluoran, 3-diethylamino-6-chloro-7-(β-ethoxyethyl)aminofluoran, 3-diethylamino-6-chloro-7-(γ-chloropropyl)aminofluoran, 3-(N-ethyl-N-isoamyl)-6-methyl-7-phenylaminofluoran, 3-dibutylamino-6-methyl-7-anilinofluoran; thiazine compounds such as - benzoyl-leucomethylene blue, p-nitrobenzoyl-leucomethylene blue; and spiro compounds such as 3-methyl-spiro-dinaphthopyran, 3-ethyl-spiro-dinaphthopyran, 3-benzylspiro-dinaphthopyran, 3-methylnaphtho-(3-methoxy-benzo)-spiropyran. These thermo-sensitive dyes are suitably selected in accordance with the use of the thermal recording material to be fabricated, and one or more of them are used either singly or as a mixture of two or more of them.

For the developer that may be in the thermo-sensitive coloring layer, preferred are phenol derivatives and aromatic carboxylic acid derivatives, and more preferred are bisphenols. Specific examples of the phenol derivatives are p-octylphenol, p-tert-butylphenol, p-phenylphenol, 1,1-bis(p-hydroxyphenyl)propane, 2,2-bis(p-hydroxyphenyl) propane, 1,1-bis(p-hydroxyphenyl)pentane, 1,1-bis(p-hydroxyphenyl)hexane, 2,2-bis(p-hydroxyphenyl)hexane, 1,1-bis(p-hydroxyphenyl)-2-ethylhexane, 2,2-bis(4-hydroxy-3,5-dichlorophenyl)propane, dihydroxydiphenyl ether. Specific examples of the aromatic carboxylic acid derivatives are p-hydroxybenzoic acid, ethyl p-hydroxybenzoate, butyl p-hydroxybenzoate, 3,5-di-tert-butylsalicylic acid, 3,5-di-α-methylbenzylsalicylic acid, and polyvalent metal salts of these carboxylic acids.

When the polyvinyl alcohol of the invention is used in the thermo-sensitive coloring layer of a thermal recording material, it may be combined with any known polymer or a dispersion thereof such as those mentioned below, not interfering with the water-resistance and the plasticizer resistance thereof. Specific examples of the polymer and its dispersion are starch and its derivatives; cellulose derivatives such as hydroxymethyl cellulose, hydroxyethyl cellulose, carboxymethyl cellulose, methyl cellulose, ethyl cellulose; other water-soluble polymers such as gum arabic, polyvinyl alcohol, alkali salt of acrylate (or methacrylate) copolymer, polyvinylpyrrolidone, acrylamide (or methacrylamide)/acrylate (or methacrylate) copolymer, alkali salt of styrene/maleic anhydride copolymer, alkali salt of isobutylene/maleic anhydride copolymer, alkali salt of diisobutylene/maleic anhydride copolymer, polyacrylamide, sodium alginate, gelatin, casein; emulsions of polyvinyl acetate, polyurethane, polyacrylic acid, polyacrylate, vinyl chloride/vinyl acetate copolymer, polybutyl methacrylate, ethylene/vinyl acetate copolymer; and latexes of styrene/butadiene copolymer, styrene/butadiene/acrylic copolymer.

A lubricant may be in the thermo-sensitive coloring layer, which includes, for example, higher fatty acids, higher fatty acid amides, metal salts of higher fatty acids, paraffin wax, microcrystalline wax.

The filler that may be in the thermo-sensitive coloring layer includes, for example, kaolin, clay, talc, calcium carbonate, calcined clay, titanium oxide, diatomaceous earth, precipitated silica, silica gel, colloidal silica, aluminum oxide, aluminum hydroxide, synthetic aluminum silicate, synthetic magnesium silicate, polystyrene particles, polyvinyl acetate particles, urea-formalin resin particles. The amount of the filler to be in the thermo-sensitive coloring layer is preferably at least 20 % by weight of the total amount of all the components of the layer.

In case where a coating agent that contains the polyvinyl alcohol of the invention is applied onto a substrate to fabricate a thermal recording material, employable is any known method of air knife coating, blade coating, gravure coating, roll coating, spraying, dipping, bar coating or extrusion coating.

Apart from the above, the polyvinyl alcohol of the invention may be used for other various applications, based on the function of the functional groups in the polymer, such as a hydroxyl group, a vinyl ester group and a silyl group. Examples of the applications are internal sizing agents for paper, fiber processing agents, dyes, coating agents for glass fibers, surface coating agents for metals, other coating agents such as antifogging agent, adhesives for wood, paper, aluminum foil and plastics, binders for nonwoven fabrics, binders for fibers, binders for construction materials such as gypsum boards and fiber plates, thickeners for various emulsion adhesives, additives to urea resin adhesives, additives to cement and mortar, various adhesives such as hot-melt adhesives and pressure-sensitive adhesives, dispersants for emulsion polymerization of various ethylenic unsaturated monomers such as ethylene, vinyl acetate and vinyl chloride, stabilizers for pigment dispersion in paints and adhesives, dispersion stabilizers for suspension polymerization of various ethylenic unsaturated monomers such as vinyl chloride, vinylidene chloride, styrene, (meth)

acrylic acid and vinyl acetate, shaped articles suchas fibers, films, sheets, pipes, tubes, water-soluble fibers and temporary films, hydrophilicating agents for hydrophobic resins, additives to synthetic resins such as those to bicomponent fibers, films and other shaped articles, soil improvers, and soil stabilizers.

Polyvinyl acetal that is obtained through acetalization of the polyvinyl alcohol of the invention with an aldehyde compound such as acetaldehyde or butyraldehyde is useful, for example, for interlayers for safety glass, ceramic binders, ink dispersants and photosensitive materials.

The invention is described in more detail with reference to the following Examples and Comparative Examples. Unless otherwise specifically indicated, "part" and "%" in the following Examples and Comparative Examples are all by weight.

I. Silyl Group-Having Polyvinyl Alcohol

PVA was produced according to the method mentioned below, and the degree of hydrolysis thereof, the silyl group-having monomer unit content thereof, the weight-average degree of polymerization thereof and the silicon atom content thereof were obtained.

Degree of Hydrolysis of PVA:

The degree of hydrolysis of PVA is determined according to the method described in JIS-K6726.

Silyl Group-Having Monomer Unit Content of PVA:

Before hydrolyzed, a polyvinyl ester to be PVA is purified through reprecipitation with hexane-acetone so that the non-reacted silyl group-having monomer is completely removed from the polymer. Next, the thus-processed polymer is dried under reduced pressure at 90°C for 2 days, and then dissolved in a solvent $CDCl_3$ to prepare a sample to be analyzed. The sample is analyzed by the use of a 500 MHz proton-NMR device (JEOL GX-500), and the silyl group-having monomer unit content of PVA is thus determined.

Weight-Average Degree of Polymerization of PVA:

PVA is hydrolyzed to a degree of hydrolysis of 99.5 mol% or more to prepare a sample, and this is analyzed through LALLS (low-angle laser light scattering spectrometry) to obtain the weight-average molecular weight of PVA. Concretely, in a GPC 224-type gel permeation chromatography device (by Waters) with three columns TSK-gel-GMPWxL (by Tosoh) connected in series therein, the sample is analyzed at 23°C. The solvent is 0.08 M tris-buffer (pH 7.9); and the detector is a differential refractiometer R-401 Model, 8X (by Waters). For obtaining the absolute molecular weight of the sample, a low-angle laser light scattering spectrometer KMX-6 Model (by Chromatix) is connected to the chromatography device. The weight-average molecular weight of the sample thus measured is divided by the formular weight of the vinyl alcohol monomer unit, 44 to obtain the weight-average degree of polymerization of the polymer sample. The weight fraction of the polymer molecules of which the degree of polymerization are more than 3 times the weight-average degree of polymerization of the whole PVA molecules, and the weight fraction of the polymer molecules of which the degree of polymerization are less than 1/2 times the weight-average degree of polymerization of the whole PVA molecules are obtained on the integral distribution of polymerization degree, which is calculated from the data obtained through the measurement as above.

Silicon Atom Content of PVA:

The silicon atom content of PVA is determined by the use a Jares Ash's ICP spectrophotometer IRIS AP, according to the method mentioned above.

PVA1:

2500 parts of vinyl acetate, 1656 parts of methanol and 752 parts of methanol solution containing 2 % by weight of vinyltrimethoxysilane (VMS) were fed into a polymerization reactor equipped with a stirrer, a temperature sensor, a chemical inlet line, a polymer liquid outlet line and a reflux condenser, purged with nitrogen with stirring, and then heated up to 60°C. To this was added 20 parts of methanol containing 0.1 parts of 2,2'-azobis(4-methoxy-2,4-dimethoxyvaleronitrile) (AMV), and the polymerization was initiated with it. From the start of the polymerization, 100 parts of methanol solution containing 2 % by weight of VMS was added and the polymerization was continued. In addition, methanol solution containing 0.13 % by weight of AMV was added to the system at a rate of 23 parts/hr, and

the polymerization was continued for 4 hours until the solid concentration in the system reached 25 %. After the solid concentration in the system reached 25 %, 625 parts/hr of vinyl acetate, 414 parts/hr of methanol, 188 parts/hr of 2 % VMS-containing methanol solution and 23 parts/hr of 0.13 % AMV-containing methanol solution were added to the system, while the polymer liquid was continuously taken out of the system so that the liquid level in the polymerization reactor could be kept constant. In that manner, the polymerization was continued. Four hours after the start of the addition of the solution, the polymer liquid was recovered. Methanol vapor was introduced into the thus-recovered polymer liquid so that the non-reacted vinyl acetate monomer was expelled out. This gave 40 % polyvinyl ester-containing methanol solution. At the start of the polymer liquid recovery, the solid concentration in the system was 25 %.

To the 40 % polyvinyl ester-containing methanol solution, added were methanol and methanol solution containing 10 % by weight of sodium hydroxide in that order with stirring so that the molar ratio of sodium hydroxide to the vinyl acetate units in the polyvinyl ester could be 0.02 and the solid concentration of the polyvinyl ester could be 35 % by weight. In that condition, hydrolysis of the polyvinyl ester was started at 40°C.

With the progress of the hydrolysis, a gel was formed and it was taken out of the reaction system immediately after its formation. Then, this was ground, and 1 hour after the start of the hydrolysis, this was neutralized with methyl acetate added thereto to obtain PVA swollen with methanol. To this, added was methanol of 6 times the weight of the methanol-swollen PVA (bath ratio, 6 times), and this was washed under reflux for 1 hour and then dried at 65°C for 16 hours to obtain PVA.

The vinyltrimethylsilane unit content of the thus-obtained PVA was 0. 50 mol%, the degree of hydrolysis thereof was 98.5 mol%, and the weight-average degree of polymerization thereof was 580. The value (A - B)/(B) obtained according to the method of determining the silicon atom content of PVA mentioned above was 10.9/100, and the pH of the aqueous 4 % PVA solution was 6.0.

PVA2:

PVA2 was produced in the same manner as that for PVA1 except that the amount of vinyl acetate and methanol to be fed, the amount of the silyl group-having monomer to be fed, the amount of the polymerization initiator to be used and the polymerization condition were varied as in Table 1. The analytic data of the thus-obtained PVA are shown in Table 4.

PVA3:

2000 parts of vinyl acetate, 2352 parts of methanol and 600 parts of methanol solution containing 2 % by weight of vinyltrimethoxysilane (VMS) were fed into a polymerization reactor 1 equipped with a stirrer, a temperature sensor, a chemical inlet line, a polymer liquid outlet line and a reflux condenser, and into a polymerization reactor 2 equipped with the same units, and these were purged with nitrogen with stirring and then heated up to 60°C. To the polymerization reactor 1 and the polymerization reactor 2, added was 20 parts of methanol containing 0.05 part of 2,2'-azobis(4-methoxy-2,4-dimethoxyvaleronitrile) (AMV), and the polymerization was initiated with it. From the start of the polymerization, 80 parts of methanol solution containing 2 % by weight of VMS was added to each polymerization reactor at a rate of 150 parts/hr, and the polymerization was continued. In addition, methanol solution containing 0.13 % by weight of AMV was added to the polymerization reactor 1 and the polymerization reactor 2 at a rate of 4 parts/hr, and the polymerization was continued for 4 hours until the solid concentration in the system reached 10 %. Next, 500 parts/hr of vinyl acetate, 588 parts/hr of methanol, 150 parts/hr of 2 % VMS-containing methanol solution and 4 parts/hr of 0.13 % AMV-containing methanol solution were added to the polymerization reactor 1, while the polymer liquid was continuously carried over from the polymerization reactor 1 to the polymerization reactor 2 and the polymer liquid was continuously removed out from the polymerization reactor 2, so that the liquid level both in the polymerization reactor 1 and the polymerization reactor 2 could be kept constant. In that manner, the polymerization was continued. When the polymer liquid was carried over from the polymerization reactor 1 to the polymerization reactor 2, 8 parts/hr of 0.13 % AMV-containing methanol was added thereto.

Four hours after the start of the transfer of the polymer liquid and when the solid concentration in the polymerization reactor 1 reached 10 % and that in the polymerization reactor 2 reached 24 %, the polymer liquid was recovered from the polymerization reactor 2. Methanol vapor was introduced into the thus-recovered polymer liquid so that the non-reacted vinyl acetate monomer was expelled out. This gave 40 % polyvinyl ester-containing methanol solution.

To the 40 % polyvinyl ester-containing methanol solution, added were methanol and methanol solution containing 10 % by weight of sodium hydroxide in that order with stirring so that the molar ratio of sodium hydroxide to the vinyl acetate units in the polyvinyl ester could be 0.02 and the solid concentration of the polyvinyl ester could be 35 % by weight. In that condition, hydrolysis of the polyvinyl ester was started at 40°C.

With the progress of the hydrolysis, a gel was formed and it was taken out of the reaction system immediately after its formation. Then, this was ground, and 1 hour after the start of the hydrolysis, this was neutralized with methyl

acetate added thereto to obtain PVA swollen with methanol. To this, added was methanol of 6 times the weight of the methanol-swollen PVA (bath ratio, 6 times), and this was washed under reflux for 1 hour and then dried at 65°C for 16 hours to obtain PVA.

The vinyltrimethylsilane content of the thus-obtained PVA was 0.50 mol%, the degree of hydrolysis thereof was 98.2 mol%, and the weight-average degree of polymerization thereof was 590. The value (A - B)/(B) obtained according to the method of determining the silicon atom content of PVA mentioned above was 9.6/100, and the pH of the aqueous 4 % PVA solution was 6.0.

PVA4:

PVA4 was produced in the same manner as that for PVA3 except that the amount of vinyl acetate and methanol to be fed, the amount of the silyl group-having monomer to be fed, the amount of the polymerization initiator to be used, the polymerization condition and the hydrolysis condition were varied as in Table 2. The analytic data of the thus-obtained PVA are shown in Table 4.

PVA5:

1050 parts of vinyl acetate, 2056 parts of methanol and 394 parts of methanol solution containing 2 % by weight of vinyltrimethoxysilane were fed into a 6-liter separable flask equipped with a stirrer, a temperature sensor, a dropping funnel and a reflux condenser, purged with nitrogen with stirring, and then heated up to 60°C. To this was added 20 parts of methanol containing 1.3 parts of 2,2'-azobisisobutyronitrile, and the polymerization was initiated with it. From the start of the polymerization, 30 parts of methanol solution containing 2 % by weight of vinyltrimethoxysilane was added to the system and the polymerization was continued for 4 hours. In that stage, the polymerization was stopped. At the time at which the polymerization was stopped, the solid concentration in the system was 15.2 %. Next, methanol vapor was introduced into the system so as to expel the non-reacted vinyl acetate monomer from the system. This gave 40 % polyvinyl ester-containing methanol solution.

To the 40 % polyvinyl ester-containing methanol solution, added were methanol and methanol solution containing 10 % by weight of sodium hydroxide in that order with stirring so that the molar ratio of sodium hydroxide to the vinyl acetate units in the polyvinyl ester could be 0.02 and the solid concentration of the polyvinyl ester could be 35 % by weight. In that condition, hydrolysis of the polyvinyl ester was started at 40°C.

With the progress of the hydrolysis, a gel was formed and it was taken out of the reaction system immediately after its formation. Then, this was ground, and 1 hour after the start of the hydrolysis, this was neutralized with methyl acetate added thereto to obtain PVA swollen with methanol. To this, added was methanol of 6 times the weight of the methanol-swollen PVA (bath ratio, 6 times), and this was washed under reflux for 1 hour and then dried at 65°C for 16 hours to obtain PVA.

The vinyltrimethylsilane content of the thus-obtained PVA was 0.50 mol%, the degree of hydrolysis thereof was 98.5 mol%, and the weight-average degree of polymerization thereof was 560. The value (A - B)/(B) obtained according to the method of determining the silicon atom content of PVA mentioned above was 10.9/100, and the pH of the aqueous 4 % PVA solution was 6.0. PVA6 to PVA9:

Various PVAs (PVA6 to PVA9) were produced in the same manner as that for PVA5 except that the amount of vinyl acetate and methanol to be fed, the type and the amount of the silyl group-having monomer to be fed, the amount of the polymerization initiator to be used, the polymerization condition and the hydrolysis condition were varied as in Table 3. The analytic data of the thus-obtained PVAs are shown in Table 4.

PVA10:

PVA10 was produced in the same manner as that for PVA1, for which, however, the polyvinyl ester hydrolysis was effected by addition of methanol solution containing 10 % by weight of sodium hydroxide in such a manner that the molar ratio of sodium hydroxide to the vinyl acetate units in the polyvinyl ester could be 0.01. The analytic data of the thus-obtained PVA are shown in Table 4.

PVA11:

PVA11 was produced in the same manner as that for PVA2, for which, however, the polyvinyl ester hydrolysis was effected by addition of methanol solution containing 10 % by weight of sodium hydroxide in such a manner that the molar ratio of sodium hydroxide to the vinyl acetate units in the polyvinyl ester could be 0.01. The analytic data of the thus-obtained PVA are shown in Table 4.

PVA12:

PVA12 was produced in the same manner as that for PVA2, for which, however, the washing operation with methanol was omitted. The analytic data of the thus-obtained PVA are shown in Table 4.

PVA13:

PVA13 was produced in the same manner as that for PVA2, for which, however, PVA obtained through hydrolysis was washed through Soxhlet extraction with methanol before it was neutralized with methyl acetate. The analytic data of the thus-obtained PVA are shown in Table 4.

PVA14:

PVA14 was produced in the same manner as that for PVA2, for which, however, PVA obtained through hydrolysis was neutralized with acetic acid in place of methyl acetate, the amount of acetic acid used for neutralization was 5 molar times that of sodium hydroxide used for hydrolysis, and the washing operation with methanol (bath ratio, 6 times) was effected at room temperature for 1 hour. The analytic data of the thus-obtained PVA are shown in Table 4.

PVA15:

PVA15 was produced in the same manner as that for PVA2, for which, however, the neutralization with methyl acetate was omitted, and the washing operation (bath ratio, 6 times) with methanol was effected at room temperature for 1 hour. The analytic data of the thus-obtained PVA are shown in Table 4.

PVA16 and PVA17:

PVA16 and PVA17 were produced in the same manner as that for PVA1 except that the amount of vinyl acetate and methanol to be fed, the amount of the silyl group-having monomer to be fed, the amount of the polymerization initiator to be used and the polymerization condition were varied as in Table 1. The analytic data of the thus-obtained PVAs are shown in Table 4. PVA18 and PVA19:

PVA18 and PVA19 were produced in the same manner as that for PVA3 except that the amount of vinyl acetate and methanol to be fed, the amount of the silyl group-having monomer to be fed, the amount of the polymerization initiator to be used, the polymerization condition and the hydrolysis condition were varied as in Table 2. The analytic data of the thus-obtained PVAs are shown in Table 4.

PVA20 and PVA21:

PVA20 and PVA21 were produced in the same manner as that for PVA5 except that the amount of vinyl acetate and methanol to be fed, the type and the amount of the silyl group-having monomer to be fed, the amount of the polymerization initiator to be used, the polymerization condition and the hydrolysis condition were varied as in Table 3. The analytic data of the thus-obtained PVAs are shown in Table 4.

PVA22:

PVA22 was produced in the same manner as that for PVA16, for which, however, the polyvinyl ester hydrolysis was effected by addition of methanol solution containing 10 % by weight of sodium hydroxide in such a manner that the molar ratio of sodium hydroxide to the vinyl acetate units in the polyvinyl ester could be 0.01. The analytic data of the thus-obtained PVA are shown in Table 4.

PVA23:

PVA23 was produced in the same manner as that for PVA17, for which, however, the polyvinyl ester hydrolysis was effected by addition of methanol solution containing 10 % by weight of sodium hydroxide in such a manner that the molar ratio of sodium hydroxide to the vinyl acetate units in the polyvinyl ester could be 0.01. The analytic data of the thus-obtained PVA are shown in Table 4.

Example 1 to Example 15:

PVA1 to PVA15 were tested for the viscosity stability of the aqueous solution of PVA, the water-resistance of the PVA film, the water-resistance of the PVA film with an inorganic substance, and the binding force of PVA with inorganic substances, according to the test methods mentioned below. The results are shown in Table 5.

Comparative Example 1 to Comparative Example 8:

PVA16 to PVA23 were tested for the viscosity stability of the aqueous solution of PVA, the water-resistance of the PVA film, the water-resistance of the PVA film with an inorganic substance, and the binding force of PVA to inorganic substances, according to the test methods mentioned below. The results are shown in Table 5.

Viscosity Stability of Aqueous PVA Solution:

An aqueous solution of 9 % PVA is prepared and left in a thermostat at 10°C. Immediately after the temperature of the aqueous PVA solution has reached 10°C and after 7 days, the viscosity of the solution is measured. The viscosity of the aqueous PVA solution after 7 days is divided by the viscosity thereof immediately after its temperature has reached 10°C (after 7 days/immediately after the temperature control). From the data, the PVA tested is evaluated according to the criteria mentioned below.

A: Less than 2.5 times.
B: From 2.5 times to less than 3.5 times.
C: 3.5 times or more, but PVA did not gel.
D: PVA lost fluidity and gelled.

Water-resistance of PVA Film:

An aqueous 4 % PVA solution is prepared, and this is cast at 20°C to form a film having a thickness of 40 µm. The film is heated at 120°C for 10 minutes, and then cut to give a test piece having a length of 10 cm and a width of 10 cm. The test piece is dipped in distilled water at 20°C for 30 minutes, and then taken out (recovered), water having adhered to its surface is wiped away with cotton gauze, and its wet weight is measured. After thus measured, the wet test piece is dried at 105°C for 16 hours, and its dry weight is measured. The wet weight of the test piece is divided by the dry weight thereof, and this is a degree of swelling (times). From it, the PVA tested is evaluated according to the criteria mentioned below.

A: Less than 4.0 times.
B: From 4.0 times to less than 5.0 times.
C: From 5.0 times to less than 9.0 times.
D: 9.0 times or more, or the dipped test piece could not be recovered.

Water-resistance of PVA Film with Inorganic Substance:

An aqueous 4 % PVA solution is prepared, to which is added an aqueous dispersion of 20 % colloidal silica (Nissan Chemical Industry's Snowtex ST-O) in such a manner that the solid content-based ratio by weight of PVA/colloidal silica may be 100/10, and the resulting mixture is cast at 20°C to form a film having a thickness of 40 µm.
The film is heated at 120°C for 30 minutes, and then cut to give a test piece having a length of 10 cm and a width of 10 cm. The test piece is dipped in distilled water at 20°C for 24 hours, and then taken out (recovered), water having adhered to its surface is wiped away with cotton gauze, and its wet weight is measured. After thus measured, the wet test piece is dried at 105°C for 16 hours, and its dry weight is measured. The wet weight of the test piece is divided by the dry weight thereof, and this is a degree of swelling (times) . From it, the PVA tested is evaluated according to the criteria mentioned below.

A: Less than 5.0 times.
B: From 5.0 times to less than 8.0 times.
C: From 8.0 times to less than 12.0 times.
D: 12.0 times or more, or the dipped test piece could not be recovered.

Evaluation of Binding Force of PVA with Inorganic Substance:

Silica (Mizusawa Chemical Industry's Mizukasil P78D) and 0.2%, based on the weight of silica, of a dispersant (Toa Synthetic Chemical Industry's Aron T40) are dispersed in water by the use of a homogenizer to prepare an aqueous dispersion of 20 % silica. To the aqueous silica dispersion, added is an aqueous 10 % PVA solution in such a manner that the solid content-based ratio by weight of silica/PVA may be 100/35, and a necessary amount of water is added thereto to prepare a silica-dispersed PVA solution having a concentration of 15 %.

The silica-dispersed PVA solution thus obtained is applied onto the surface of woodfree paper, using a wire bar. Its amount applied to the paper is 60 $g/m^2$ in a basic weight. Thus coated, the paper is dried with a hot air drier at 100°C for 3 minutes. This is a coated test sample. After dried, the amount of the coating layer on the paper (test sample) is 11 $g/m^2$.

Using an IGT printability tester, the sample is tested under a printing pressure of 25 $kg/cm^2$. The printing speed (cm/sec) at which the surface of the test sample has peeled is read, and this indicates the surface strength of the test sample. From it, the binding force of PVA tested herein is evaluated according to the criteria mentioned below. In testing the sample with the IGT printability tester, used is IGT Pick Oil M (by Dai-Nippon Ink Chemical Industry), and a mechanism of spring drive B of the tester is employed.

A: 260 cm/sec or higher.
B: From 220 cm/sec to lower than 260 cm/sec.
C: From 180 cm/sec to lower than 220 cm/sec.
D: Lower than 180 cm/sec.

Table 1

| Type of PVA | VAc[1)] | MeOH[1)] | Silyl Group-Having Monomer | | | Initiator | | | Solid Concentration (%) | Hydrolysis Condition | |
|---|---|---|---|---|---|---|---|---|---|---|---|
| | | | Type | Concentration of MeOH Solution (%) | Amount Added[1)] | Type | Concentration of MeOH Solution (%) | Amount Added[1)] | | Solid Concentration (%) | NaOH molar ratio |
| PVA 1 | 625 | 414 | VMS | 2.0 | 188 | AMV | 0.13 | 23 | 25 | 35 | 0.02 |
| PVA 2 | 1000 | 179 | VMS | 4.0 | 60 | AMV | 0.13 | 11 | 32 | 30 | 0.02 |
| PVA16 | 625 | 600 | - | - | 188 | AMV | 0.13 | 23 | 25 | 35 | 0.02 |
| PVA17 | 1000 | 240 | - | - | 60 | AMV | 0.13 | 11 | 32 | 30 | 0.02 |

VMS: vinyltrimethoxysilane
AMV: 2,2'-azobis(4-methoxy-2,4-dimethylvaleronitrile)
1) parts/hr

Table 2

| Type of PVA | VAc[1)] | MeOH[1)] | Silyl Group-Having Monomer | | | Initiator Addition to Polymerization Reactor 1 | | | Solid Concentration in Polymerization Reactor 1 (%) | Initiator Addition to Polymerization Reactor 2 | | | Solid Concentration in Polymerization Reactor 2 (%) | Hydrolysis Condition | |
|---|---|---|---|---|---|---|---|---|---|---|---|---|---|---|---|
| | | | Type | Concentration of MeOH Solution (%) | Amount Added[1)] | Type | Concentration of MeOH Solution (%) | Amount Added[1)] | | Type | Concentration of MeOH Solution (%) | Amount Added[1)] | | Solid Concentration (%) | NaOH molar ratio |
| PVA 3 | 500 | 588 | VMS | 2.0 | 150 | AMV | 0.13 | 4 | 10 | AMV | 0.13 | 8 | 24 | 35 | 0.02 |
| PVA 4 | 1000 | 181 | VMS | 4.0 | 60 | AMV | 0.13 | 7 | 24 | AMV | 0.13 | 2 | 44 | 30 | 0.02 |
| PVA18 | 750 | 234 | VMS | 2.0 | 225 | AMV | 0.13 | 1 | 6 | AMV | 0.13 | 40 | 46 | 35 | 0.02 |
| PVA19 | 1100 | 60 | VMS | 4.0 | 66 | AMV | 0.13 | 4 | 18 | AMV | 0.13 | 20 | 57 | 30 | 0.02 |

VMS: vinyltrimethoxysilane
AMV: 2,2'-azobis(4-methoxy-2,4-dimethylvaleronitrile)
1) parts/hr

Table 3

| Type of PVA | Initial Feeding | | Silyl Group-Having Monomer | | | | Initiator | | Polymerization Condition | | Hydrolysis Condition | |
|---|---|---|---|---|---|---|---|---|---|---|---|---|
| | VAc (parts) | MeOH (parts) | Type | Concentration of MeOH Solution (%) | Amount of Initial Feed (parts) | Amount of Additional Feed (parts) | Type | Amount of Initial Feed (parts) | Polymerization Time (hr) | Solid Concentration (%) | Solid Concentration (%) | NaOH molar ratio |
| PVA 5 | 1050 | 2056 | VMS | 2.0 | 394 | 30 | AIBN | 1.3 | 4.0 | 15.2 | 35 | 0.02 |
| PVA 6 | 2275 | 543 | VMS | 1.0 | 682 | 36 | AIBN | 0.5 | 4.0 | 22.7 | 30 | 0.02 |
| PVA 7 | 2800 | 700 | AMPTMS | 3.0 | 8 | 47 | AIBN | 0.4 | 4.0 | 19.7 | 25 | 0.02 |
| PVA 8 | 1400 | 1574 | VMS | 2.0 | 526 | 67 | AIBN | 4.2 | 6.0 | 33.6 | 35 | 0.02 |
| PVA 9 | 2800 | 280 | VMS | 2.0 | 420 | 49 | AIBN | 1.5 | 6.0 | 61.7 | 30 | 0.02 |
| PVA20 | 2275 | 655 | VMS | 3.0 | 570 | 26 | AIBN | 0.5 | 4.0 | 19.8 | 30 | 0.02 |
| PVA21 | 1050 | 2136 | VMS | 0.1 | 314 | 24 | AIBN | 1.1 | 4.0 | 14.9 | 30 | 0.02 |

VMS: vinyltrimethoxysilane

AMPTMS: 2-acrylamido-2-methylpropyltrimethoxysilane

AIBN: 2,2'-azobisisobutyronitrile

Table 4

| Type of PVA | Silyl Group-Having Monomer Content (mol%) | Weight-Average Degree of Polymerization (Pw) | Pw*3 (%)[1] | Pw*1/2 (%)[2] | Degree of Hydrolysis (mol%) | (A−B)/(B) | pH of Aqueous 4 % Solution |
|---|---|---|---|---|---|---|---|
| PVA 1 | 0.50 | 580 | 19.9 | 9.1 | 98.5 | 10.9/100 | 6.0 |
| PVA 2 | 0.20 | 1940 | 19.9 | 9.0 | 98.3 | 11.2/100 | 6.0 |
| PVA 3 | 0.50 | 590 | 22.2 | 10.2 | 98.2 | 9.6/100 | 6.0 |
| PVA 4 | 0.20 | 1900 | 19.1 | 10.3 | 98.7 | 14.5/100 | 6.0 |
| PVA 5 | 0.50 | 560 | 19.9 | 9.9 | 98.5 | 10.9/100 | 6.0 |
| PVA 6 | 0.20 | 1890 | 19.8 | 9.3 | 98.7 | 9.2/100 | 6.0 |
| PVA 7 | 0.10 | 2840 | 19.3 | 9.3 | 98.2 | 0.7/100 | 6.0 |
| PVA 8 | 0.50 | 620 | 20.8 | 14.9 | 98.5 | 10.3/100 | 6.0 |
| PVA 9 | 0.20 | 1980 | 20.2 | 13.0 | 98.6 | 12.1/100 | 6.0 |
| PVA10 | 0.50 | 580 | 19.9 | 9.1 | 91.7 | 12.1/100 | 6.0 |
| PVA11 | 0.20 | 1940 | 19.9 | 9.0 | 92.3 | 10.1/100 | 6.0 |
| PVA12 | 0.20 | 1940 | 19.9 | 9.0 | 98.5 | 54.0/100 | 6.0 |
| PVA13 | 0.20 | 1940 | 19.9 | 9.0 | 98.1 | 0.04/100 | 6.0 |
| PVA14 | 0.20 | 1940 | 19.9 | 9.0 | 98.2 | 14.5/100 | 3.0 |
| PVA15 | 0.20 | 1940 | 19.9 | 9.0 | 99.3 | 7.2/100 | 8.5 |
| PVA16 | - | 600 | 19.8 | 8.9 | 98.5 | - | 6.0 |
| PVA17 | - | 2010 | 19.7 | 9.2 | 98.5 | - | 6.0 |
| PVA18 | 0.50 | 620 | 29.8 | 8.3 | 98.5 | 10.9/100 | 6.0 |
| PVA19 | 0.20 | 1940 | 26.1 | 9.7 | 98.4 | 12.2/100 | 6.0 |
| PVA20 | 0.50 | 1890 | 19.8 | 9.3 | 98.5 | 10.9/100 | 6.0 |
| PVA21 | 0.02 | 560 | 19.9 | 9.9 | 98.2 | 0.7/100 | 6.0 |
| PVA22 | - | 600 | 19.8 | 8.9 | 92.3 | - | 6.0 |
| PVA23 | - | 2010 | 19.7 | 9.2 | 91.9 | - | 6.0 |

1) Weight fraction (%) of polymer molecules of which the degree of polymerization are more than 3 times the weight-average degree of polymerization of the whole PVA molecules.
2) Weight fraction (%) of polymer molecules of which the degree of polymerization are less than 1/2 times the weight-average degree of polymerization of the whole PVA molecules.

Table 5

| | Type of Aqueous PVA | Viscosity Stability of PVA Solution | Water-resistan ce of PVA Film | Water-resistance of PVA Film with Inorganic Substance | Binding Force of PVA |
|---|---|---|---|---|---|
| Example 1 | PVA 1 | A | A | A | A |
| Example 2 | PVA 2 | A | A | A | A |
| Example 3 | PVA 3 | A | A | A | A |
| Example 4 | PVA 4 | A | A | A | A |
| Example 5 | PVA 5 | A | A | A | A |
| Example 6 | PVA 6 | A | A | A | A |
| Example 7 | PVA 7 | A | A | A | A |
| Examples 8 | PVA 8 | B | B | B | B |
| Example 9 | PVA 9 | B | B | B | B |
| Example 10 | PVA10 | A | B | B | . B |
| Example 11 | PVA11 | A | B | B | B |
| Example 12 | PVA12 | B | B | B | B |
| Example 13 | PVA13 | B | B | B | B |
| Example 14 | PVA14 | B | B | B | B |
| Example 15 | PVA15 | B | B | B | B |
| Comp. Ex. 1 | PVA16 | A | A | D | D |
| Comp. Ex. 2 | PVA17 | A | A | D | D |
| Comp. Ex. 3 | PVA18 | C | A | C | C |
| Comp. Ex. 4 | PVA19 | C | A | C | C |
| Comp. Ex. 5 | PVA20 | -1) | -1) | -1) | -1) |
| Comp. Ex. 6 | PVA21 | A | A | D | D |
| Comp. Ex. 7 | PVA22 | A | C | D | D |
| Comp. Ex. 8 | PVA23 | A | C | D | D |

1) Evaluation was impossible since PVA did not dissolve in an aqueous solution.

From the results in Table 5, it is understood that the polyvinyl alcohol of the invention has well-balanced properties of good viscosity stability of its aqueous solution, good water-resistance of its film, good water-resistance of its film with an inorganic substance, and good binding force with inorganic substances (Examples 1 to 15). In particular, when the polyvinyl alcohol satisfies the above-mentioned formula (II), $0.1/100 \leq (A - B) / (B) \leq 50/100$ and the pH of its aqueous 4 % solution falls between 4 and 8, and when the weight fraction of the polymer molecules of which the degree of polymerization are smaller than 3 times the weight-average degree of polymerization Pw of the whole PVA molecules is 12% by weight or less, then the balance of the physical properties of the polyvinyl alcohol is better (Examples 1 to 7, and Examples 10 and 11).

In addition, since the water-resistance of the film of the polyvinyl alcohol of the invention with an inorganic substance therein is good and since the binding force of the polyvinyl alcohol of the invention with inorganic substances is high, the polyvinyl alcohol of the invention is favorable for the binder in the ink-receiving layer in inkjet recording materials.

On the other hand, the polyvinyl alcohol, of which Pw (weight-average degree of polymerization of polyvinyl alcohol) $\times$ S (silyl group-having monomer content of polyvinyl alcohol) is not larger than 20, is not good in point of the water-resistance of its film with an inorganic substance and of its binding force with inorganic substances (Comparative

Example 6); and the polyvinyl alcohol of which Pw × S is not smaller than 460 could not completely dissolve in water and therefore could not be evaluated (Comparative Example 5).

In addition, it is further understood that the polyvinyl alcohol, of which the weight fraction of the polymer molecules having degree of polymerization that are more than 3 times the weight-average degree of polymerization Pw of the whole polyvinyl alcohol molecules is more than 25 % by weight, is not also good in point of the viscosity stability of its aqueous solution, the water-resistance of its film with an inorganic substance and its binding force with inorganic substances (Comparative Examples 3 and 4).

It is also understood that the polyvinyl alcohol with no silyl group-having monomer therein is not good in point of the water-resistance of its film with an inorganic substance and its binding force with inorganic substances (Comparative Examples 1, 2, 7 and 8).

II. Inkjet Recording Paper

Inkjet recoding paper was fabricated according to the method mentioned below, and its surface strength of ink-receiving layer was evaluated. Its print quality and water-resistance were also evaluated in the case of printing on the inkjet recording paper by using an inkjet printer.

Example 16:

Aqueous 10% PVA1 solution was prepared. Silica (Grace Davison's SYLOID 162) was dispersed in water by the use of a homogenizer to prepare an aqueous dispersion of 20 % silica. To the aqueous silica dispersion, added was an aqueous 10 % PVA1 solution and cationic polymer (Sumitomo Chemical's Sumirez Resin 1001) in such a manner that the solid content-based ratio by weight of silica/PVA/cationic polymer may be 100/55/3, and a necessary amount of water was added thereto to prepare a coating liquid having a solid concentration of 14 % for an ink-receiving layer.

Using a BL-type viscometer, the liquid was measured at 40°C and at 30 rpm. Immediately after its preparation, the viscosity of the coating liquid was 480 mPa·s. After left at 40°C for 1 week, the viscosity was 1.92 times that of the coating liquid just after its preparation, or that is, there was found little viscosity change before and after the storage of the coating liquid and the viscosity stability thereof was good.

The above-mentioned coating liquid for ink-receiving layer was applied onto the surface of base paper (woodfree paper having a weight of 60 $g/m^2$), using a wire bar coater, and its coating amount was 11 $g/m^2$ in terms of the solid content thereof. This was dried with a hot air drier at 100°C for 3 minutes to be an inkjet recording paper.

Surface Strength of Ink-Receiving Layer:

Using an IGT printability tester, the given inkjet recording paper was tested under a print ing pressure of 25 $kg/cm^2$. The printing speed (cm/sec) at which the surface of the inkjet recording paper has peeled was read, and this indicated the surface strength of the paper. From it, the surface strength of ink-receiving layer tested herein was evaluated according to the criteria mentioned below. In testing the paper with the IGT printability tester, used was IGT Pick Oil M (by Dai-Nippon Ink Chemical Industry), and a mechanism of spring drive B of the tester was employed.

A: 260 cm/sec or higher.
B: From 220 cm/sec to lower than 260 cm/sec.
C: From 180 cm/sec to lower than 220 cm/sec.
D: Lower than 180 cm/sec.

Print Quality:

A section of a given inkjet recording paper was painted out by using an inkjet printer (EPSON's PM-3300C) with black ink, and then print quality was observed. This was evaluated according to the criteria mentioned below.

A: The image density was uniform in the whole image area and the printed image was good.
B: Little unevenness of image density was observed and the printed image was not almost damaged.
C: Unevenness of image density was occurred in a part of the image area and the quality of printed image was lowered.
D: Unevenness of image density was occurred in the whole image area and the quality of printed image was extremely lowered.

Water-resistance:

A section of a given inkjet recording paper was painted out by using an inkjet printer (EPSON'S PM-3300C) with black ink. 1ml of water was dropped on the edge of the printed area by syringe. The paper was left for 24 hours, and then was observed the extent of blur in the area spotted with water. This was evaluated according to the following criteria:

A: No blur was observed.
B: Blur was scarcely observed.
C: Blur was partly spread.
D: Blur was entirely spread in the area spotted with water.

Examples 17 to 30:

Inkjet recording paper was fabricated in the same manner as in Example 16, for which, however, the silyl group-having PVAs shown in Table 6 were used in place of the silyl group-having PVAs used in Example 16. The surface strength of ink-receiving layer of the paper, and the print quality and water resistance of the paper printed with an inkjet printer were evaluated. The results are shown in Table 6.

Comparative Examples 9 to 16:

Inkjet recording paper was fabricated in the same manner as in Example 16, for which, however, the PVAs shown in Table 6 were used in place of the silyl group-having PVAs used in Example 16. The surface strength of ink-receiving layer of the paper, and the print quality and water resistance of the paper printed with an inkjet printer were evaluated. The results are shown in Table 6.

Table 6

| | Type of PVA | PVA/ Silica | Coating Liquid for Ink-receiving Layer | | Surface Strength of Ink-receiving Layer | Print Quality | Water-resistance |
|---|---|---|---|---|---|---|---|
| | | | Viscosity[1)] | Viscosity change[2)] | | | |
| Example 16 | PVA 1 | 55/100 | 480 | 1.92 | A | A | A |
| Example 17 | PVA 2 | 35/100 | 560 | 2.13 | A | A | A |
| Example 18 | PVA 3 | 50/100 | 420 | 2.42 | A | A | A |
| Example 19 | PVA 4 | 30/100 | 550 | 2.38 | A | A | A |
| Example 20 | PVA 5 | 60/100 | 510 | 2.01 | A | A | A |
| Example 21 | PVA 6 | 30/100 | 550 | 2.21 | A | A | A |
| Example 22 | PVA 7 | 5/100 | 280 | 2.26 | A | A | B |
| Example 23 | PVA 8 | 80/100 | 810 | 3.14 | B | B | B |
| Example 24 | PVA 9 | 20/100 | 490 | 3.41 | B | A | B |
| Example 25 | PVA10 | 60/100 | 510 | 2.09 | B | A | B |
| Example 26 | PVA11 | 30/100 | 530 | 1.98 | B | A | B |
| Example 27 | PVA12 | 15/100 | 450 | 3.30 | B | A | B |
| Example 28 | PVA13 | 20/100 | 480 | 3.41 | B | A | B |
| Example 29 | PVA14 | 30/100 | 560 | 2.86 | B | A | B |
| Example 30 | PVA15 | 35/100 | 570 | 2.91 | B | A | B |
| Comp. Example 9 | PVA16 | 100/100 | 690 | 1.98 | D | C | D |
| Comp. Example 10 | PVA17 | 5/100 | 260 | 2.19 | D | C | D |
| Comp. Example 11 | PVA18 | 50/100 | 450 | 8.20 | C | A | C |
| Comp. Example 12 | PVA19 | 30/100 | 550 | 11.06 | C | A | C |
| Comp. Example 13 | PVA20 | 30/100 | 540 | -[3)] | -[3)] | -[3)] | -[3)] |
| Comp. Example 14 | PVA21 | 80/100 | 790 | 2.26 | D | D | D |
| Comp. Example 15 | PVA22 | 80/100 | 750 | 2.31 | D | C | D |
| Comp. Example 16 | PVA23 | 15/100 | 410 | 2.40 | D | A | D |

1) The viscosity of the coating liquid measured with a BL-type viscometer at 40°C and at 30 rpm, just after the preparation thereof. (unit: mPa·s)
2) (viscosity of coating liquid left at 40°C for 1 week)/(viscosity of coating liquid just after its preparation).
3) PVA did not completely dissolve in an aqueous solution.

From the results in Table 6, it is understood that the inkjet recording paper in which the polyvinyl alcohol of the invention is used for the binder in the ink-receiving layer has high surface strength of ink-receiving layer, and also has good print quality and good water-resistance when the recording paper is printed by using an inkjet printer (Examples 16 to 30).

In particular, the properties of the inkjet recording paper is better in case that the polyvinyl alcohol used for the binder in the ink-receiving layer satisfies the above-mentioned formula (II), $0.1/100 \leq (A - B)/(B) \leq 50/100$, the pH of 4 % aqueous solution of the polyvinyl alcohol falls between 4 and 8, the weight fraction of the polymer molecules of which the degree of polymerization are smaller than 1/2 times the weight-average degree of polymerization Pw of the whole PVA molecules is 12% by weight or less, and the degree of hydrolysis is more than 95 mol% (Examples 16 to 22).

As opposed to these, when the polyvinyl alcohol of which Pw (weight-average degree of polymerization of polyvinyl alcohol) $\times$ S (silyl group-having monomer unit content of polyvinyl alcohol) is 20 or less is used for the binder in the ink-receiving layer, the surface strength of ink-receiving layer is not good and the print quality and water-resistance of the inkjet recording paper are also not good (Comparative Example 14) ; and the polyvinyl alcohol of which Pw $\times$ S is 460 or more could not completely dissolve in water and therefore could not be evaluated (Comparative Example 13).

Further, it is understood that when the polyvinyl alcohol, in which the weight fraction of the polyvinyl alcohol molecules of which the degree of polymerization are more than 3 times the weight-average degree of polymerization of the whole polyvinyl alcohol molecules is over 25 % by weight, is used for the binder in the ink-receiving layer, the surface strength of the ink-receiving layer is not good and the water-resistance of the recording paper is not good (Comparative Example 11 and 12).

It is also understood that in the case of using the polyvinyl alcohol with no silyl group-having monomer therein for the binder of ink-receiving layer, the surface strength of ink-receiving layer is poor and the print quality and water-resistance of the inkjet recording paper are poor (Comparative Examples 9, 10, 15 and 16).

III. Thermal Recording Paper

Thermal recoding paper was fabricated according to the method mentioned below, and its water-resistance and plasticizer resistance were evaluated.

Example 31:

(1) Preparation of aqueous dispersions of thermo-sensitive dye, developer and pigment:

| Composition of aqueous dispersion A of thermo-sensitive dye: | |
|---|---|
| Leuco dye (Yamamoto Chemical's OBD-2) | 20 % |
| Aqueous solution of 10 % PVA (Kuraray's PVA203) | 20 % |
| Water | 60 % |

| Composition of aqueous dispersion B of developer: | |
|---|---|
| Developer (Nippon Soda's D-8) | 20 % |
| Aqueous solution of 10 % PVA (Kuraray's PVA203) | 20 % |
| Water | 60 % |

| Composition of aqueous dispersion C of pigment: | |
|---|---|
| Stearamide | 10 % |
| Calcined kaolin | 20 % |
| Aqueous solution of 5 % PVA (Kuraray's PVA205) | 30 % |
| Water | 40 % |

Aqueous dispersion A, aqueous dispersion B and aqueous dispersion C each having the composition mentioned above were prepared separately, and each was pre-stirred in a beaker for 15 minutes.

Next, the aqueous dispersion A was transferred into a sand grinder (Kansai Paint's batch-type desktop sand

grinder), to which were added 300 ml of glass beads (soda-quartz glass beads having a diameter of 0.5 mm), and this was rotated at a high revolution (2170 rpm) with cooling for 6 hours to disperse the dispersoid. This was analyzed with a laser diffraction-type grain size analyzer (Shimadzu's SALD-1000), and the dispersoid particle size of the aqueous dispersion A of thermo-sensitive dye was 0.46 μm. In addition, this was analyzed with a color difference meter (Nippon Denshoku Kogyo's Z-1001DP), and the degree of whiteness of the aqueous dispersion A was -8.1. Regarding the degree of whiteness, 0 means that the sample analyzed is completely white, and a larger minus value means that the sample analyzed is colored more.

In the same manner, the aqueous dispersion B was transferred into a sand grinder of the same type, to which were added 300 ml of glass beads (soda-quartz glass beads having a diameter of 0.5 mm), and this was rotated at a high revolution (2170 rpm) with cooling for 6 hours to disperse the dispersoid.

The aqueous dispersion C was transferred into a homogenizer, and its dispersoid was dispersed at a revolution of 10000 rpm for 2 minutes.

(2) Preparation of coating liquid for thermo-sensitive coloring layer:

2 parts of the aqueous dispersion A, 4 parts of the aqueous dispersion B, 2 parts of the aqueous dispersion C and 2 parts of an aqueous solution of 10 % PVA5 were mixed and stirred, to which a necessary amount of water was added to prepare a coating liquid having a solid concentration of 21 % for a thermo-sensitive coloring layer.

Using a BL-type viscometer, the liquid was measured at 25°C and at 30 rpm. Immediately after its preparation, the viscosity of the coating liquid was 280 mPa·s. After left at 25°C for 1 week, the viscosity was 1.10 times that of the coating liquid just after its preparation, or that is, there was found little viscosity change before and after the storage of the coating liquid and the viscosity stability thereof was good.

(3) Preparation of coating liquid for overcoat layer:

72.5 parts of water was added to 0.2 part of ethylene glycol-propylene glycol copolymer (Nippon Yushi's Pronon 104) and 50 parts of silica (Shionogi's Carplex CS-5) . With fully dispersing it, 690 parts of an aqueous solution of 12 % PVA1 was gradually added to it at room temperature, and then 7.5 parts of zinc stearate dispersion (Chukyo Yushi's Hidrin Z730, having a solid concentration of 30 %) was added thereto to prepare an aqueous dispersion of PVA1 with silica.

With stirring the aqueous dispersion of PVA1 with silica thus prepared, 30 parts of an aqueous solution of 10 % titanium lactate was gradually added thereto at room temperature, to which a necessary amount of water was added to prepare a coating liquid for a overcoat layer having a solid concentration of 15 %.

Using a BL-type viscometer, the liquid was measured at 25°C and at 30 rpm. Immediately after its preparation, the viscosity of the coating liquid was 360 mPa·s. After left at 25°C for 1 week, the viscosity was 1.21 times that of the coating liquid just after its preparation, or that is, there was found little viscosity change before and after the storage of the coating liquid and the viscosity stability thereof was good.

(4) Fabrication of thermal recording paper:

The coating liquid for thermo-sensitive coloring layer that had been prepared in the above (2) was applied onto the surface of base paper (woodfree paper having a weight of 52 g/$m^2$), using a wire bar coater, and its coating amount was 6 g/$m^2$ in terms of the solid content thereof. This was dried at 50°C for 5 minutes. The coated paper was surface-treated with a supercalender (linear pressure: 30 kg/cm). Then, the coating liquid for overcoat layer that had been prepared in the above (3) was applied onto the surface of the coated paper, using a wire bar coater, and its coating amount was 3 g/$m^2$ in terms of the solid content thereof. This was dried at 50°C for 10 minutes. The coated paper was surface-treated with a supercalender (linear pressure: 30 kg/cm) to be thermal recording paper.

Immediately after its fabrication, the thermal recording paper was set in a thermal printer for facsimiles (Ricoh' s Refax 300) and printed thereon, and its water-resistance and plasticizer resistance were evaluated according to the methods mentioned below. The results are shown in Table 7. Water-resistance:

The printed paper was dipped in distilled water at 30°C for 24 hours, and then its image density and wet rubbing resistance were evaluated in the manner mentioned below.

Image Density:

Before and after dipped in distilled water, the color density of the image area of the printed paper was measured with a Macbeth densitometer (Macbeth's Model RD-514). In point of water resistance, it was better for the thermal recording paper having kept higher image density after dipped in distilled water. Based on this, the samples were

ranked into five ranks, from 1 (the worst) to 5 (the best).

Wet Rubbing Resistance:

The surface of the image area of the printed paper was rubbed with fingers, and checked for an amount of the coating which was come off on fingers. In view of water resistance, it was better for the thermal recording paper that the amount of the coating come off on fingers was less. Based on this, the samples were ranked into five ranks, from 1 (the worst) to 5 (the best).

Plasticizer Resistance:

A soft polyvinyl chloride film was put on the printed paper, and kept at 30°C under a load of 300 g/m$^2$ for 24 hours. The image density of the thus-tested paper was measured with a Macbeth densitometer (Macbeth's Model RD-514) and compared with that of the paper before the test. In point of Plasticizer resistance, it was better for the thermal recording paper having kept higher image density after contact with a soft polyvinyl chloride. Based on this, the samples were ranked into five ranks, from 1 (the worst) to 5 (the best).

Examples 32 to 48:

Thermal recording paper was fabricated in the same manner as in Example 31, for which, however, the silyl group-having PVAs shown in Table 7 were used in place of the silyl group-having PVAs used in Example 31, and its water-resistance and plasticizer resistance were evaluated. The results are shown in Table 7.

Example 49:

(1) Preparation of aqueous dispersions of thermo-sensitive dye, developer and pigment:

| Composition of aqueous dispersion A of thermo-sensitive dye: | |
|---|---|
| Leuco dye (Yamamoto Chemical's OBD-2) | 20 % |
| Aqueous solution of 10 % PVA (Kuraray's PVA203) | 20 % |
| Water | 60 % |

| Composition of aqueous dispersion B of developer: | |
|---|---|
| Developer (Nippon Soda's D-8) | 20 % |
| Aqueous solution of 10 % PVA (Kuraray's PVA203) | 20 % |
| Water | 60 % |

| Composition of aqueous dispersion C of pigment: | |
|---|---|
| Stearamide | 10 % |
| Calcined kaolin | 20 % |
| Aqueous solution of 5 % PVA (Kuraray's PVA 205) | 30 % |
| Water | 40 % |

Aqueous dispersion A, aqueous dispersion B and aqueous dispersion C each having the composition mentioned above were prepared separately, and each was pre-stirred in a beaker for 15 minutes.

Next, the aqueous dispersion A was transferred into a sand grinder (Kansai Paint's batch-type desktop sand grinder), to which were added 300 ml of glass beads (soda-quartz glass beads having a diameter of 0.5 mm), and this was rotated at a high revolution (2170 rpm) with cooling for 6 hours to disperse the dispersoid. This was analyzed with a laser diffraction-type grain size analyzer (Shimadzu's SALD-1000), and the dispersoid particle size of the aqueous dispersion A of thermo-sensitive dye was 0.46 µm. In addition, this was analyzed with a color difference meter (Nippon Denshoku Kogyo's Z-1001DP), and the degree of whiteness of the aqueous dispersion A was -8.1.

In the same manner, the aqueous dispersion B was transferred into a sand grinder of the same type, to which were added 300 ml of glass beads (soda-quartz glass beads having a diameter of 0.5 mm), and this was rotated at a high revolution (2170 rpm) with cooling for 6 hours to disperse the dispersoid.

The aqueous dispersion C was transferred into a homogenizer, and its dispersoid was dispersed at a revolution of 10000 rpm for 2 minutes.

(2) Preparation of coating liquid for thermo-sensitive coloring layer:

2 parts of the aqueous dispersion A, 4 parts of the aqueous dispersion B, 2 parts of the aqueous dispersion C and 2 parts of an aqueous solution of 10 % PVA1 were mixed and stirred, to which 0.3 part of an aqueous solution of 10 % titanium lactate was slowly added at room temperature and a necessary amount of water was added, to prepare a coating liquid having a solid concentration of 21 % for a thermo-sensitive coloring layer.

Using a BL-type viscometer, the liquid was measured at 25°C and at 30 rpm. Immediately after its preparation, the viscosity of the coating liquid was 310 mPa·s. After left at 25°C for 1 week, the viscosity was 1.19 times that'of the coating liquid just after its preparation.

(3) Fabrication of thermal recording paper:

The coating liquid for thermo-sensitive coloring layer that had been prepared in the above (2) was applied onto the surface of base paper (woodfree paper having a weight of 52 g/m$^2$), using a wire bar coater, and its coating amount was 6 g/m$^2$ in terms of the solid content thereof. This was dried at 50°C for 5 minutes. The coated paper was surface-treated with a supercalender (linear pressure: 30 kg/cm) to be thermal recording paper. Its water-resistance and plasticizer resistance were evaluated in the same manner as in Example 31. The results are shown in Table 7.

Examples 50 and 51:

Thermal recording paper was fabricated in the same manner as in Example 49, for which, however, the silyl group-having PVAs shown in Table 7 were used in place of the silyl group-having PVAs used in Example 49, and its water-resistance and plasticizer resistance were evaluated. The results are shown in Table 7.

Comparative Examples 17 to 24:

Thermal recording paper was fabricated in the same manner as in Example 31, for which, however, the PVAs shown in Table 8 were used in place of the silyl group-having PVAs used in Example 31, and its water-resistance and plasticizer resistance were evaluated. The results are shown in Table 8.

Comparative Examples 25 to 27:

Thermal recording paper was fabricated in the same manner as in Example 49, for which, however, the PVAs shown in Table 8 were used in place of the silyl group-having PVAs used in Example 49, and its water-resistance and plasticizer resistance were evaluated. The results are shown in Table 8.

Table 7

| | PVA used in Thermo-sensitive coloring layer | Coating Liquid for Thermo-sensitive coloring layer | | PVA used in Overcoat layer | Coating Liquid for Overcoat layer | | Water-resistance | | Plasticizer Resistance |
|---|---|---|---|---|---|---|---|---|---|
| | | Viscosity[1] | Viscosity Change[2] | | Viscosity[1] | Viscosity Change[2] | Image Density | Wet Rubbing Resistance | |
| Example 31 | PVA 5 | 280 | 1.10 | PVA 1 | 360 | 1.21 | 5 | 5 | 4 |
| Example 32 | PVA 5 | 280 | 1.10 | PVA 2 | 650 | 1.09 | 5 | 5 | 5 |
| Example 33 | PVA 5 | 280 | 1.10 | PVA 3 | 360 | 1.20 | 5 | 4 | 4 |
| Example 34 | PVA 5 | 280 | 1.10 | PVA 4 | 650 | 1.10 | 5 | 5 | 5 |
| Example 35 | PVA10 | 270 | 1.09 | PVA 5 | 360 | 1.61 | 5 | 5 | 4 |
| Example 36 | PVA10 | 270 | 1.09 | PVA 6 | 630 | 1.07 | 5 | 5 | 5 |
| Example 37 | PVA10 | 270 | 1.09 | PVA 7 | 840 | 1.81 | 5 | 5 | 5 |
| Example 38 | PVA 5 | 280 | 1.10 | PVA 8 | 360 | 2.61 | 4 | 4 | 4 |
| Example 39 | PVA 5 | 280 | 1.10 | PVA 9 | 660 | 3.02 | 4 | 4 | 5 |
| Example 40 | PVA10 | 270 | 1.09 | PVA10 | 310 | 1.40 | 4 | 4 | 4 |
| Example 41 | PVA10 | 270 | 1.09 | PVA11 | 600 | 1.05 | 4 | 4 | 5 |
| Example 42 | PVA 5 | 280 | 1.10 | PVA12 | 650 | 3.12 | 4 | 4 | 5 |
| Example 43 | PVA 5 | 280 | 1.10 | PVA13 | 650 | 2.96 | 4 | 4 | 5 |
| Example 44 | PVA 5 | 280 | 1.10 | PVA14 | 650 | 3.06 | 4 | 4 | 5 |
| Example 45 | PVA 5 | 280 | 1.10 | PVA15 | 630 | 1.12 | 4 | 4 | 5 |
| Example 46 | PVA 1 | 280 | 1.10 | PVA17 | 580 | 1.03 | 3 | 3 | 4 |
| Example 47 | PVA 5 | 280 | 1.10 | PVA19 | 610 | 6.21 | 3 | 3 | 4 |
| Example 48 | PVA10 | 270 | 1.09 | PVA23 | 560 | 1.02 | 3 | 3 | 4 |
| Example 49 | PVA 1 | 310 | 1.19 | -[3] | | | 3 | 3 | 3 |
| Example 50 | PVA 5 | 300 | 1.27 | -[3] | | | 3 | 3 | 3 |
| Example 51 | PVA10 | 310 | 1.22 | -[3] | | | 3 | 3 | 3 |

1) The viscosity of the coating liquid measured with a BL-type viscometer at 25°C and at 30 rpm, just after the preparation thereof. (unit: mPa·s)
2) (viscosity of coating liquid left at 25°C for 1 week)/(viscosity of coating liquid just after its preparation).
3) Overcoat layer was absent.

Table 8

| | PVA used in Thermo-sensitive coloring layer | Coating Liquid for Thermo-sensitive coloring layer | | PVA used in Overcoat layer | Coating Liquid for Overcoat layer | | Water-resistance | | Plasticizer Resistance |
|---|---|---|---|---|---|---|---|---|---|
| | | Viscosity[1] | ViscosityChange[2] | | Viscosity[1] | ViscosityChange[2] | Image Density | Wet Rubing Resistance | |
| Comp. Ex. 17 | PVA21 | 260 | 1.10 | PVA16 | 290 | 1.01 | 1 | 1 | 4 |
| Comp. Ex. 18 | PVA21 | 260 | 1.10 | PVA17 | 580 | 1.03 | 1 | 1 | 5 |
| Comp. Ex. 19 | PVA21 | 260 | 1.10 | PVA18 | 340 | 7.10 | 2 | 2 | 4 |
| Comp. Ex. 20 | PVA21 | 260 | 1.10 | PVA19 | 610 | 6.21 | 2 | 2 | 5 |
| Comp. Ex. 21 | PVA21 | 260 | 1.10 | PVA20 | -[3] | -[3] | -[4] | -[4] | -[4] |
| Comp. Ex. 22 | PVA21 | 260 | 1.10 | PVA21 | 350 | 2.13 | 1 | 1 | 4 |
| Comp. Ex. 23 | PVA21 | 260 | 1.10 | PVA22 | 270 | 1.01 | 1 | 1 | 4 |
| Comp. Ex. 24 | PVA21 | 260 | 1.10 | PVA23 | 560 | 1.02 | 1 | 1 | 5 |
| Comp. Ex. 25 | PVA16 | 300 | 1.11 | -[5] | | | 1 | 1 | 1 |
| Comp. Ex. 26 | PVA18 | 310 | 1.11 | -[5] | | | 1 | 1 | 1 |
| Comp. Ex. 27 | PVA21 | 270 | 1.12 | -[5] | | | 1 | 1 | 1 |

1) The viscosity of the coating liquid measured with a BL-type viscometer at 25°C and at 30 rpm, just after the preparation thereof. (unit: mPa·s)
2) (viscosity of coating liquid left at 25°C for 1 week)/(viscosity of coating liquid just after its preparation).
3) PVA did not completely dissolve in an aqueous solution. 4) Uniform coating layer could not be prepared.
5) Overcoat layer was absent.

From the results in Table 7, it is understood that the thermal recording paper, in which the polyvinyl alcohol of the invention is used for at least one layer selected from the thermo-sensitive coloring layer and the overcoat layer, has good water-resistance and good plasticizer resistance (Examples 31 to 51).

In particular, the properties of the thermal recording paper is better in case that the polyvinyl alcohol used in the overcoat layer satisfies the above-mentioned formula (II), $0.1/100 \leq (A - B)/(B) \leq 50/100$, the pH of 4 % aqueous solution of the polyvinyl alcohol falls between 4 and 8, the weight fraction of the polymer molecules of which the degree of polymerization are smaller than 1/2 times the weight-average degree of polymerization Pw of the whole PVA molecules is 12% by weight or less, and the degree of hydrolysis of the polyvinyl alcohol is more than 95 mol% (Examples 31 to 37).

On the other hand, it is understood from the results in Table 8 that when the polyvinyl alcohol of the invention is used for neither thermo-sensitive coloring layer nor overcoat layer, at least either water-resistance or plasticizer resistance of the thermal recording paper is poor (Comparative Examples 17 to 27).

Of these, when the polyvinyl alcohol of which Pw (weight-average degree of polymerization of polyvinyl alcohol) × S (silyl group-having monomer unit content of polyvinyl alcohol) is 20 or less is used for the thermo-sensitive coloring layer and the overcoat layer, the water-resistance of the thermal recording paper is not good (Comparative Example 22) ; and the polyvinyl alcohol of which Pw × S is 460 or more could not completely dissolve in water and therefore could not be evaluated (Comparative Example 21).

In the case of using the polyvinyl alcohol, in which the weight fraction of the polyvinyl alcohol molecules of which the degree of polymerization are more than 3 times the weight-average degree of polymerization of the whole polyvinyl alcohol molecules is over 25 % by weight, is used for the overcoat layer, the water-resistance of thermal recording paper is poor (Comparative Examples 19 and 20). When the polyvinyl alcohol with no silyl group-having monomer therein is used for both thermo-sensitive coloring layer and overcoat layer, the water-resistance is also poor (Comparative Examples 17, 18, 23 and 24).

Further, when the polyvinyl alcohol of the invention is not used for the thermo-sensitive coloring layer and the overcoat layer is absent, both water-resistance and plasticizer resistance of thermal recording paper is poor (Comparative Examples 25 to 27).

The silyl group-having polyvinyl alcohol of the invention can dissolve in water to prepare its aqueous solution even when an alkali such as sodiumhydroxide or an acid is not added thereto, and, in addition, it satisfies all the requirements that the viscosity stability of the aqueous solution thereof is good, the water-resistance of the film formed of the aqueous solution thereof is good, the water-resistance of the film with an inorganic substance therein is also good, and the binding force thereof with inorganic substances is high. Therefore, the polyvinyl alcohol of the invention has many applications, and especially in excellent performance as coating agents to be combined with inorganic substances. And the coating agent that contains the silyl group-having polyvinyl alcohol of the invention is applied to substrates to produce inkjet recording material and thermal recording material having excellent properties such as water-resistance.

Some preferred embodiments of the invention have been described as in the above, and anyone skilled in the art who sees the description of this specification may readily vary and modify the invention within a self-obvious range thereof. Accordingly, the change and the modification shall be within the scope of the invention that is defined by the attached claims.

## Claims

1. A polyvinyl alcohol obtained through hydrolysis of a polyvinyl ester that contains silyl group-having monomer units of formula (1):

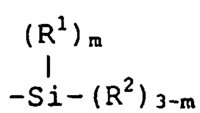

(1)

wherein $R^1$ represents an alkyl group having from 1 to 5 carbon atoms; $R^2$ represents an alkoxyl or acyloxyl group optionally having an oxygen-containing, substituent; and m indicates an integer of from 0 to 2, which is **characterized in that** the polyvinyl alcohol satisfies the following formula (I)

$$20 < Pw \times S < 460 \quad \text{(I)}$$

wherein Pw indicates the weight-average degree of polymerization of the polyvinyl alcohol, and S indicates the content (mol%) of the silyl group-having monomer units of formula (1) in the polyvinyl alcohol,
and the weight fraction of polyvinyl alcohol molecules having degree of polymerization that are more than 3 times the weight-average degree of polymerization of the whole polyvinyl alcohol molecules is at most 25 % by weight in the polyvinyl alcohol.

**2.** The polyvinyl alcohol as claimed in claim 1, wherein the weight fraction of the polymer molecules having the degree of polymerization that are smaller than 1/2 times the weight-average degree of polymerization of the whole polyvinyl alcohol molecules is at most 12 % by weight.

**3.** The polyvinyl alcohol as claimed in claim 1 or 2, which satisfies the following formula (II) and of which the aqueous 4 % solution has a pH of from 4 to 8:

$$0.1/100 \leq (A - B)/(B) \leq 50/100 \quad (II)$$

wherein A indicates the silicon atom content (unit: ppm) of the polyvinyl alcohol; B indicates the silicon atom content (unit: ppm) of the polyvinyl alcohol that has been washed with sodium hydroxide-containing methanol and then washed through Soxhlet extraction with methanol, and
A and B are measured by ashing a sample of the polyvinyl alcohol and subjecting it to ICP emission spectrometry.

**4.** A method for producing the polyvinyl alcohol of claim 1, which comprises copolymerizing a vinyl ester monomer with a monomer having a silyl group of formula (1):

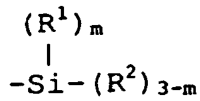
(1)

wherein $R^1$ represents an alkyl group having from 1 to 5 carbon atoms; $R^2$ represents an alkoxyl or acyloxyl group optionally having an oxygen-containing substituent; and m indicates an integer of from 0 to 2,
and then hydrolyzing the resulting polyvinyl ester.

**5.** The method for producing the polyvinyl alcohol as claimed in claim 4, wherein the silyl group-having monomer is represented by formula (2):

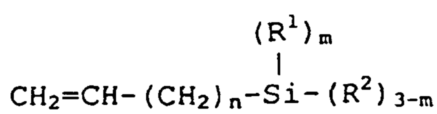
(2)

wherein $R^1$ represents an alkyl group having from 1 to 5 carbon atoms; $R^2$ represents an alkoxyl or acyloxyl group optionally having an oxygen-containing substituent; m indicates an integer of from 0 to 2; and n indicates an integer of from 0 to 4,
or by formula (3):

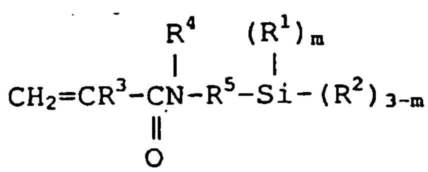
(3)

wherein $R^1$ represents an alkyl group having from 1 to 5 carbon atoms; $R^2$ represents an alkoxyl or acyloxyl

group optionally having an oxygen-containing substituent; $R^3$ represents a hydrogen atom or a methyl group; $R^4$ represents a hydrogen atom, or an alkyl group having from 1 to 5 carbon atoms; $R^5$ represents an alkylene group having from 1 to 5 carbon atoms, or a divalent hydrocarbon group that contains an oxygen or nitrogen atom; and m indicates an integer of from 0 to 2.

**6.** A coating agent that contains the polyvinyl alcohol of any one of claims 1 to 3.

**7.** A coated article produced by applying the coating agent of claim 6 to a substrate.

**8.** An inkjet recording material produced by applying the coating agent of claim 6 to a substrate.

**9.** A thermal recording material produced by applying the coating agent of claim 6 to a substrate.

## Patentansprüche

**1.** Polyvinylalkohol, erhalten durch Hydrolyse eines Polyvinylesters, der Silylgruppen-aufweisende Monomereinheiten der Formel (1) enthält:

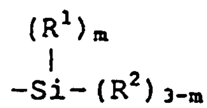

.(1)

wobei $R^1$ eine Alkylgruppe mit 1 bis 5 Kohlenstoffatomen darstellt, $R^2$ eine Alkoxyl- oder Acyloxylgruppe, gegebenenfalls mit einem Sauerstoff-haltigen Substituenten, darstellt, und m eine ganze Zahl von 0 bis 2 angibt, welcher **dadurch gekennzeichnet ist, dass** der Polyvinylalkohol der folgenden Formel (I) genügt

$$20 < Pw \times S < 460 \qquad (I)$$

wobei Pw den massegemittelten Polymerisationsgrad des Polyvinylalkohols angibt, und S den Gehalt (mol%) der Silylgruppen-aufweisenden Monomereinheiten der Formel (1) in dem Polyvinylalkohol angibt,
und der Gewichtsanteil von Polyvinylalkohol-Molekülen mit Polymeriationsgrad, der mehr als das 3-fache des massegemittelten Polymerisationsgrades der gesamten Polyvinylalkohol-Moleküle ist, höchstens 25 Gew.-% in dem Polyvinylalkohol beträgt.

**2.** Polyvinylalkohol gemäß Anspruch 1, wobei der Gewichtsanteil der Polymermoleküle mit dem Polymerisationsgrad, der kleiner als das ½-fache des massegemittelten Polymerisationsgrades der gesamten Polyvinylalkohol-Moleküle ist, höchstens 12 Gew.-% beträgt.

**3.** Polyvinylalkohol gemäß Anspruch 1 oder 2, welcher der folgenden Formel (II) genügt und von welchem die wässerige 4%ige Lösung einen pH von 4 bis 8 aufweist:

$$0{,}1/100 \leq (A - B) / (B) \leq 50/100 \qquad (II)$$

wobei A den Siliziumatomgehalt (Einheit: ppm) des Polyvinylalkohols angibt, B den Siliziumatomgehalt (Einheit: ppm) des Polyvinylalkohols, der mit Natriumhydroxid-haltigem Methanol gewaschen worden ist und dann durch Soxhlet-Extraktion mit Methanol gewaschen worden ist, angibt, und
A und B durch Veraschen einer Probe des Polyvinylalkohols und Unterziehen dieser der ICP-Emissionsspektroskopie gemessen werden.

**4.** Verfahren zum Herstellen des Polyvinylalkohols von Anspruch 1, welches Copolymerisieren eines Vinylestermonomers mit einem Monomer mit einer Silylgruppe der Formel (1):

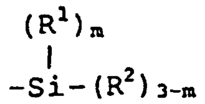 . (1)

wobei $R^1$ eine Alkylgruppe mit 1 bis 5 Kohlenstoffatomen darstellt, $R^2$ eine Alkoxyl- oder Acyloxylgruppe, gegebenenfalls mit einem Sauerstoff-haltigen Substituenten, darstellt, und m eine ganze Zahl von 0 bis 2 angibt, und dann Hydrolysieren des resultierenden Polyvinylesters umfasst.

**5.** Verfahren zum Herstellen des Polyvinylalkohols gemäß Anspruch 4, wobei das Silylgruppen-aufweisende Monomer durch Formel (2):

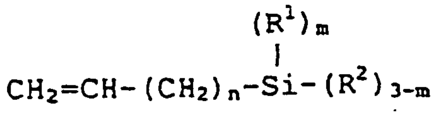 (2)

wobei $R^1$ eine Alkylgruppe mit 1 bis 5 Kohlenstoffatomen darstellt, $R^2$ eine Alkoxyl- oder Acyloxylgruppe, gegebenenfalls mit einem Sauerstoff-haltigen Substituenten, darstellt, m eine ganze Zahl von 0 bis 2 angibt, und n eine ganze Zahl von 0 bis 4 angibt,
oder durch Formel (3) dargestellt ist:

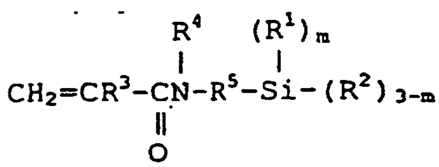 (3)

wobei $R^1$ eine Alkylgruppe mit 1 bis 5 Kohlenstoffatomen darstellt, $R^2$ eine Alkoxyl- oder Acyloxylgruppe, gegebenenfalls mit einem Sauerstoff-haltigen Substituenten, darstellt, $R^3$ ein Wasserstoffatom oder eine Methylgruppe darstellt, $R^4$ ein Wasserstoffatom oder eine Alkylgruppe mit 1 bis 5 Kohlenstoffatomen darstellt, $R^5$ eine Alkylengruppe mit 1 bis 5 Kohlenstoffatomen oder eine zweiwertige Kohlenwasserstoffgruppe, welche ein Sauerstoff- oder Stickstoffatom enthält, darstellt, und m eine ganze Zahl von 0 bis 2 angibt.

**6.** Beschichtungsmittel, welches den Polyvinylalkohol von einem der Ansprüche 1 bis 3 enthält.

**7.** Beschichteter Gegenstand, hergestellt durch Auftragen des Beschichtungsmittels von Anspruch 6 auf ein Substrat.

**8.** Tintenstrahl-Aufzeichnungsmaterial, hergestellt durch Auftragen des Beschichtungsmittels von Anspruch 6 auf ein Substrat.

**9.** Thermisches Aufzeichnungsmaterial, hergestellt durch Auftragen des Beschichtungsmittels von Anspruch 6 auf ein Substrat.

## Revendications

**1.** Poly(alcool vinylique) obtenu par hydrolyse d'un poly(ester vinylique) qui contient des motifs monomères comportant des groupes silyle, de formule (1) :

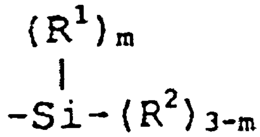

(1)

dans laquelle $R^1$ représente un groupe alkyle ayant de 1 à 5 atomes de carbone ; $R^2$ représente un groupe alcoxyle ou acyloxyle ayant en option un substituant oxygéné ; et m désigne un entier de 0 à 2,

qui est **caractérisé en ce que** le poly(alcool vinylique) satisfait à la formule (I) ci-après :

$$20 < Pw \times S < 460 \quad \text{(I)}$$

dans laquelle Pw indique le degré moyen en masse de polymérisation du poly(alcool vinylique), et S indique la teneur, en % en moles, du poly(alcool vinylique) en les motifs monomères comportant un groupe silyle de formule (1),

et la fraction pondérale des molécules de poly(alcool vinylique) ayant un degré de polymérisation supérieur à 3 fois le degré moyen en masse de polymérisation de la totalité des molécules de poly(alcool vinylique) est d'au plus 25 % en poids dans le poly(alcool vinylique).

2. Poly(alcool vinylique) selon la revendication 1, dans lequel la fraction pondérale des molécules polymères ayant un degré de polymérisation inférieur à la moitié du degré moyen en masse de polymérisation de la totalité des molécules de poly(alcool vinylique) est d'au plus 12 % en poids.

3. Poly(alcool vinylique) selon la revendication 1 ou 2, qui satisfait à la formule (II) ci-après et dont la solution aqueuse à 4 % a un pH de 4 à 8 :

$$0{,}1/100 \le (A - B)/(B) \le 50/100 \quad \text{(II)*}$$

où A indique la teneur en atomes de silicium (unité : ppm) du poly(alcool vinylique) ; B désigne la teneur en atomes de silicium (unité : ppm) du poly(alcool vinylique) qui a été lavé avec du méthanol contenant de l'hydroxyde de sodium et qui a été ensuite lavé par extraction au Soxhlet avec du méthanol, et

A et B sont mesurés par incinération d'un échantillon du poly(alcool vinylique), lequel est ensuite soumis à une spectrométrie d'émission ICP.

4. Procédé de production du poly(alcool vinylique) selon la revendication 1, qui comprend la copolymérisation d'un ester vinylique monomère avec un monomère ayant un groupe silyle de formule (1) :

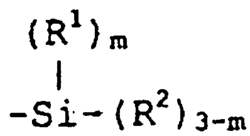

(1)

dans laquelle $R^1$ représente un groupe alkyle ayant de 1 à 5 atomes de carbone ; $R^2$ représente un groupe alcoxyle ou acyloxyle ayant en option un substituant oxygéné ; et m désigne un entier de 0 à 2,

puis hydrolyse du poly(ester vinylique) obtenu.

5. Procédé de production du poly(alcool vinylique) selon la revendication 4, dans lequel le monomère comportant des groupes silyle est représenté par la formule (2) :

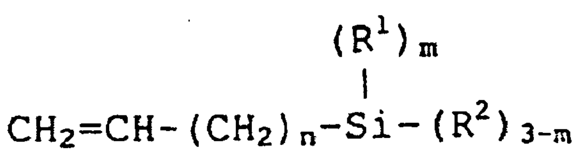

(2)

dans laquelle $R^1$ représente un groupe alkyle ayant de 1 à 5 atomes de carbone ; $R^2$ représente un groupe alcoxyle ou acyloxyle ayant en option un substituant oxygéné ; m désigne un entier de 0 à 2 ; et n désigne un entier de 0 à 4, ou par la formule (3) :

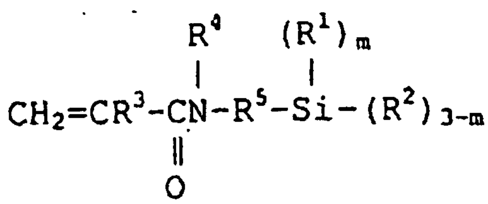

(3)

dans laquelle $R^1$ représente un groupe alkyle ayant de 1 à 5 atomes de carbone ; $R^2$ représente un groupe alcoxyle ou acyloxyle ayant en option un substituant oxygéné ; $R^3$ représente un atome d'hydrogène ou un groupe méthyle ; $R^4$ représente un atome d'hydrogène ou un groupe alkyle ayant de 1 à 5 atomes de carbone ; R5 représente un groupe alkylène ayant de 1 à 5 atomes de carbone
ou un groupe hydrocarboné divalent qui contient un atome d'oxygène ou d'azote ; et m désigne un entier de 0 à 2.

**6.** Agent de revêtement qui contient le poly(alcool vinylique) selon l'une quelconque des revendications 1 à 3.

**7.** Objet revêtu produit par application de l'agent de revêtement selon la revendication 6 sur un substrat.

**8.** Matériau d'enregistrement pour jet d'encre produit par application de l'agent de revêtement selon la revendication 6 sur un substrat.

**9.** Matériau d'enregistrement thermique produit par application de l'agent de revêtement selon la revendication 6 sur un substrat.